# EUROPEAN PATENT SPECIFICATION

(11) **EP 3 542 516 B1**
(45) Date of publication and mention of the grant of the patent: **02.09.2020**
(21) Application number: 16801731.7
(22) Date of filing: 17.11.2016
(51) Int. Cl.: H04L 29/08, B33Y 80/00

(54) **METHOD FOR OPERATING AT LEAST ONE ADDITIVE MANUFACTURING APPARATUS**
VERFAHREN ZUM BETRIEB VON MINDESTENS EINER VORRICHTUNG ZUR GENERATIVEN FERTIGUNG
PROCÉDÉ DE FONCTIONNEMENT D'AU MOINS UN APPAREIL DE FABRICATION ADDITIVE

(43) Date of publication of application: 25.09.2019
(73) Proprietor: Innogy Innovation GmbH, 45139 Essen (DE)
(72) Inventor: STÖCKER, Dr. Carsten, 40724 Hilden (DE)
(74) Representative: Cohausz & Florack
(86) International application number: PCT/EP2016/077958
(87) International publication number: WO 2018/091091

(56) References cited:
- GB-A- 2 510 965
- US-A1- 2013 328 228
- US-A1- 2015 331 402
- US-A1- 2016 260 001
- Anonymous: "Blockchain - Wikipedia", , 16 November 2016 (2016-11-16), XP055394566, Retrieved from the Internet: URL:https://en.wikipedia.org/w/index.php?t itle=Blockchain&oldid=749853094 [retrieved on 2017-07-28]

## Description

The invention relates to a method for operating at least one additive manufacturing apparatus, in particular, to an additive manufacturing method according to independent claim 1 and a production system according to independent claim 14.

Additive manufacturing, also called 3D printing, becomes more and more important in manufacturing components. Additive manufacturing apparatuses are used in a plurality of different applications, such as automotive, architecture, art and design, modelling, mechanical engineering, construction (contour crafting), aerospace industry, medical and dental applications, packaging industry, bioprinting.

An additive manufacturing apparatus may comprise one or more producing tool(s) configured to produce a first component. For instance, at least one starting material can be fed to the additive manufacturing apparatus. The additive manufacturing apparatus is configured to treat the at least one starting material such that a desired first component is produced.

US 2013/328228 A1 and US 2015/331402 A1 relate to controlling parameters for an additive manufacturing process.

Usually, a first design plan (e.g. a control data set in form of CAD data, 3D print design data, etc.) can be provided to the additive manufacturing apparatus. The additive manufacturing apparatus may have controlling means configured to generate a first controlling data set based on the provided first design plan.

A general problem of current available additive manufacturing apparatuses and respective production systems is that the rejection rate is high. In particular, there is a large number of first control parameter values to be set in accordance with the first design plan. Thereby, small discrepancy of a control parameter value e.g. regarding an input material and e.g. its physical material parameters(s) or a group of parameter values (e.g. if values affect each other) from the optimal parameter value and optimal values of the group, respectively, may cause the production of erroneous first components or at least results in suboptimal material properties of the first components.

Currently, the first control data sets (e.g. including selection of input materials (e.g. metallic powders, plastic particles, filaments)) are manually readjusted or adapted. An operator of the manufacturing apparatus may analyze the erroneous first component(s) and adapt the first control data set based on the own experience again and again until the quality of one or more first component(s) meet a predefinable quality. The production process must be regularly interrupted. In particular, the efficiency of current additive manufacturing methods is low.

Therefore, it is an object of the present invention to provide a method for operating at least one additive manufacturing apparatus which enables to reduce the rejection rate, in particular, in a fast and secure manner.

The object is solved according to a first aspect of the present invention by a method according to independent claim 1.

In contrast to the prior art, the efficiency of an additive manufacturing process (also called 3D-printing process) is increased by providing at least one peer-to-peer application for controlling an optimizing process used for optimizing the (used) control data set. Due to the provision of the peer-to-peer application and the provision of an optimizing process (controlled by the peer-to-peer application) in order to create an adapted, in particular, improved control data set, the rejection rate is reduced and/or the material properties of a produced component are further improved and/or a geometrical design is further optimized. Further, the production process can be managed and controlled, in particular, optimized without a central instance but by a peer-to-peer application of a peer-to-peer network. By the fact that instead of a conventional central server or a platform, a peer-to-peer network (also called a framework) undertakes the, in particular, tamper-proof controlling of the optimizing process, by means of a peer-to-peer application, high security standards are achieved in that all computers (peer nodes or simply nodes) in the peer-to-peer network, at least a part of the nodes in the peer-to-peer network, at least monitor(s) the optimizing process, in particular, by executing the controlling means. Thereby, transaction costs can be significantly reduced. No central, superior platform, server, cloud, etc. is required. The complexity of managing and controlling an additive manufacturing process can be reduced. Any kind of confidential data can be securely managed due to the provision of a peer-to-peer application executable by at least a part (e.g. >2) of the nodes of a peer-to-peer application. The production process is conducted in a more efficient manner.

The method according to the present application can be used in a production system for operating one or more additive manufacturing apparatus(es), also called 3d-printing apparatus(es). An additive manufacturing apparatus comprises one or more producing tool(s) configured to produce at least one first component. In particular, according to the present application, additive manufacturing refers to various processes used to synthesize a three-dimensional product and component, respectively. More particularly, the additive manufacturing apparatus may be configured to process at least one starting material by forming successive layers of the starting material to produce the product. The producible components can be of almost any shape or geometry. The at least one starting material may be (by example only) a metal material, ceramic material or a plastic material. The starting material can be supplied to the additive manufacturing apparatus, in particular, to the at least one producing tool e.g. by means of a starting material input. An additive manufacturing apparatus according to the present application can work (and comprise respective producing tool(s)) according to one of the following technologies fused deposition modeling (FDM) or fused filament fabrication (FFF), robocasting or direct ink writing (DIW), stereolithography (SLA), digital light processing (DLP), powder bed and inkjet head 3D printing (3DP), electron-beam melting (EBM), selective laser melting (SLM), selective heat sintering (SHS), selective laser sintering (SLS), direct metal laser sintering (DMLS), laminated object manufacturing (LOM), directed energy deposition, electron beam freeform fabrication (EBF³), nano lithography, 4D printing or the like.

The at least one additive manufacturing apparatus, in particular at least one producing tool, creates a first component in accordance with a first control data set, which can be, in particular, based on a provided 3D model. The control parameter data set can comprise control parameter values related to the direct control parameter(s) of the producing tool and/or to indirect control parameter(s) of the producing tool, such as the physical parameter(s) of the at least one starting material (e.g. selection of a particular material having a particular form, size, etc.).

Preferably, a plurality of component parameters can be monitored, in particular, measured by one or more sensor unit(s). It may be also possible that a component parameter can be retrieved from a component storage (e.g. database with data about previously produced (similar) components) or the like. According to the present application, at least one component parameter data set comprising at least one component parameter value related to the first component is provided to at least one peer-to-peer application of at least one peer-to-peer network. In addition, further data may be provided to the peer-to-peer application, such as capabilities of the additive manufacturing apparatus, the first control data set, etc. It may be possible that the peer-to-peer application and/or the optimizing means already comprises said data.

In comparison to a client server system in which a server provides a service (e.g. an optimizing process) and a client uses the service, these roles are cancelled in the present peer-to-peer network. Each participant (e.g. node) of the peer-to-peer network can use a service and the like and offer such a service. In particular, a peer-to-peer network is self-determined and/or self-organized (without any higher-level units). In the present case, preferably, each node and computer, respectively, of the peer-to-peer network comprises the (same) peer-to-peer application. In other words, the same peer-to-peer application including the controlling means is preferably executed by a plurality of nodes of the peer-to-peer network.

For instance, communication between the peer-to-peer network and the additive manufacturing apparatus can be realized by providing a peer-to-peer module at least assigned to the additive manufacturing apparatus. A peer-to-peer module may be configured to communicate, e.g. send/receive messages to/from the peer-to-peer application. The peer-to-peer module may be a peer and node, respectively, of the peer-to-peer network. The peer-to-peer module may provide at least one component parameter set to the peer-to-peer application.

At least based on the provided component parameter data set related to a produced first component or a first component to be produced and the (current) first control data set, an optimizing process (controlled by the controlling means) may be conducted by at least one optimizing means (e.g. of the peer-to-peer application). The optimizing process may include a change of one or more control parameter value(s) and a simulation and/or an algorithmic calculation of an expected quality of a produced first component taken the provided component parameter data set into account. The result of the optimizing process is, in particular, an adapted first control data set which is expected to improve the quality of the first component to be produced.

Controlling one or more optimizing process(es) may include the controlling of an optimizing means wherein such a means can be implemented in the peer-to-peer application or a computing device controlled by the peer-to-peer application. Controlling one or more optimizing process(es) may also include conducting an optimizing process by the controlling means. Preferably, the controlling means can be formed as a smart contract executable by at least a part of the nodes of the peer-to-peer network.

A control data set comprises one or more control set value(s) for controlling the at least one producing tool, as previously described. Non-exhaustive examples of control parameter values and set values, respectively, are feeding speed of the at least one starting material, feeding amount of the at least one starting material, laser intensity, wavelength of the laser, angle of the laser, impinging location of the laser, size of the laser spot, etc. It shall be understood the control parameter values depend on the technology used by the additive manufacturing apparatus.

According to an embodiment, optimizing may include conducting an algorithmic validation or a check whether a set of component and/or control parameters and/or apparatus specification data may deliver an expected outcome and/or quality. It is referred to the (positive or negative) outcome of this process as 'Proof of Manufacturability' (or 'Proof of Printability' in case of 3D printing). In a preferred embodiment of the application a Proof of Manufacturability mean may be built upon a validated algorithm and/or a (trusted execution) environment in which this algorithm may be executed. This environment may be registered on the peer-to-peer application. Further, this environment might have a peer-to-peer module and/or a crypto chip to sign the outcome of a Proof of Manufacturability calculation.

It shall be understood that a trusted third party can also run the algorithm and provide a signed outcome of the validation process. The Proof of Manufacturability outcome and/or the signature of the Proof of Manufacturability mean is stored in the peer-to-peer application and preferably linked, hashed and/or signed e.g. with the ID of a (hashed and/or signed) set of component and/or control and/or apparatuses specification data. Entities that want to use such a data set may get a validated proof whether it functions or not or what the expected outcome may be.

Further, test and analysis data of a manufactured component can be used to further improve the validation algorithm in the Proof of Manufacturability mean (feedback loop). Within this feedback look a validation algorithm maturity metric can be established.

It shall be understood that the Proof of Manufacturability mean can be run with any data set prior to the production of a component. It can also be integrated in simulation algorithm(s) to further improve simulation result(s). The output of any simulation and Proof of Manufacturability can be stored in the peer-to-peer application to indicate or proof the quality of a data set (e.g. 3D printing design).

It shall be understood that the proof can include
- a binary output (yes/no),
- a maturity metric or reputation metric of the validation algorithm,
- a quality metric of the output,
- a probability (distribution) for achieving (different) quality levels,
- quality variation data when produced on different manufacturing apparatuses,
- etc.

The proof can also be the combination of the above.

Furthermore, according to an embodiment, prior to actually producing a first component by the additive manufacturing apparatus in accordance with a first control data set during a first production step, in a simulating step, the production of the first component based on data set(s) of previously produced (similar) components, wherein a simulation result can be provided to the peer-to-peer application as a component parameter data set.

According to a preferred embodiment of the method according to the present application, the first component may be produced in accordance with the adapted first control data set during the first production step. In other words, during the production of the first component the control data set used for producing said first component can be adapted based on the result of an optimizing process. The optimizing process can be at least partly conducted in parallel to the first production step (or in advance of the first production step). The production of the first component may start in accordance with the control data of a first control data set. During the production step, the first control data set can be changed, i.e. set values of one or more control parameter(s) can be changed, in particular, by at least partly substituting a first control data set by an adapted first control data set. In order to optimize a control data set used for producing a specific component during the production step of said specific component, preferably, at least one component parameter value related to the first component may be detected prior to the first production step and/or during the first production step. For instance, one or more starting material parameter related to at least one starting material of the first component and/or at least one status parameter of the additive manufacturing apparatus used (or to be used) for manufacturing the first component can be detected prior and/or during the production step. In addition, it may be possible that one or more production parameter(s) regarding to one or more intermediated production result(s) of the first component can be detected and, in particular, taken into account.

Alternatively or additionally, at least one further first component may be produced in accordance with the adapted first control data set during at least one further first production step. For instance, after producing the first component, the first control data set can be substituted by an adapted first control data set. Then at least one further first component can be manufactured in accordance with the adapted first control data set. For instance, the quality of the formerly produced first component can be detected (e.g. one or more quality test(s) can be conducted) and, in particular, taken into account. Preferably, any kind of failures of the formerly produced first component (e.g. cracks, or any deviation in material properties). For instance, acoustical properties, such as acoustical absorption, speed of sound, etc., chemical properties, such as corrosion resistance, hygroscopy, reactivity, specific internal surface area, surface energy, surface tension, etc., electrical properties, such as dielectric constant, dielectric strength, electrical conductivity, permittivity, piezoelectric constants, Seebeck coefficient, etc., magnetic properties, such as curie temperature, diamagnetism, hysteresis, permeability, etc., mechanical properties, such as brittleness, bulk modulus, coefficient of friction, coefficient of restitution, compressive strength, creep, ductility, elasticity, fatigue limit, flexibility, flexural modulus, flexural strength, fracture toughness, hardness, plasticity, poison's ratio, resilience, shear modulus, shear strength, specific modulus, specific strength, specific weight, stiffness, tensile strength, toughness, viscosity, yield strength, young's modulus, etc., optical properties, such as absorbance, birefringence, color, luminosity, photosensitivity, reflectivity, refractive index, scattering, transmittance, etc., radiological properties, such as neutron cross-section, specific activity, etc.
thermal properties, such as binary phase diagram, coefficient of thermal expansion, emissivity, flammability, glass transition temperature, heat of vaporization, melting point, pyrophoricity, specific heat, thermal conductivity, thermal diffusivity, thermal expansion, etc., or any other deviation from the desired result) can be detected. The one or more detected component parameter(s) can be provided to the peer-to-peer application for the optimizing process. For detecting at least one of the previously described properties, at least one sensor unit comprising one or more sensors can be provided.

According to a preferred embodiment, two or more additive manufacturing apparatuses (including sensor(s) and measuring apparatus(es) for at least one of the previously described material properties) can be connected to the peer-to-peer network. In particular, at least one further first component may be produced in accordance with the adapted first control data set during at least one further first production step by at least one further additive manufacturing apparatus. Advantageously, the optimizing result(s) (e.g. adapted control data set(s)) can be used by different additive manufacturing apparatus(es) connected with the peer-to-peer network.

It shall be understood that the optimizing process(es) and the respective adaption(s) of the first control data set(s) can be conducted as long as the result of the first component meets predefined quality requirements or e.g. an algorithm indicates that further adaptions cannot further improve either material parameters or geometries of components.

It shall be understood that algorithm(s) might detect an optimum for a component based on predefined requirement(s).

It shall be understood that the optimizing process(es) and the respective adaption(s) of the first control data set(s) can take into account individual parameter(s) of an additive manufacturing apparatus (e.g. laser age, customised apparatus parameters). These parameters might be identified or measured and stored in the peer-to-peer application e.g. in immutable data records.

In order to detect one or more component parameter value(s) related to the first component, one or more sensor unit(s) may be integrated in the additive manufacturing apparatus(es) and/or may be integrated in other apparatuses (e.g. testing/quality assurance devices, additive manufacturing post processing devices (e.g. drilling, blast cleaning, cutting, anodic treatments, colouring, polishing, etc.)), packaging apparatus(es), transport device(s), storage device(s), etc.) of the supply chain related to the production of the first component and/or may be formed as stand-alone device(s).

In a preferred embodiment, at least one sensor unit may be equipped with a peer-to-peer module and/or a crypto chip. The sensor unit may be registered as a so called smart asset on the peer-to-peer application.

In order to (correctly) identify a component a unique identifier may be attached or tagged to the component and/or physical object via e.g. a RFID tag or a QR code. In an embodiment, the unique identifier may be created by a peer-to-peer application nano computer (i.e. a crypto chip and / or a microcontroller) which may be registered on the peer-to-peer application.

In a further embodiment the unique identifier may comprise a link to a component storage, in particular, a so called digital product memory. Master data and sensor data e.g. related to an additive manufacturing apparatus and/or a produced component and/or a group of components may be stored in the digital product memory. Data is stored preferably in an encrypted form (e.g. public key cryptography, Vernam cryptography, homomorphic encryption, etc.). In an embodiment, the digital product memory data may be stored in the peer-to-peer application.

It shall be understood that in a first step of a manufacturing process a tag may be selected. The tag may be configured to produce a private and a public key. By registering the tag with its public key in the peer-to-peer application an identifier may be created. The tag may identify the component along the whole manufacturing process. A manufacturing apparatus may read the tag when a component is entering the first or a new manufacturing step. Sensor data generated in the manufacturing process can be stored in the respective component storage that may be linked to the identifier of the tag. This may ensure that the data is correctly assigned to the respectived component.

It shall be understood that a component storage, such as a digital product memory, e.g. implemented in a decentral data storage technology (e.g. bigchainDB) can also store token of values. In case the data of a digital product memory may increase future value in a supply chain through an optimisation process the optimisation means might transfer tokens of value into the digital product memory or an respective wallet account (the wallet address might be stored in the digital product memory or in a smart contract transaction). Terms and conditions for access of optimisation means to a digital product memory and benefit sharing might be defined in a peer-to-peer application (e.g. smart contract). Via the peer-to-peer application one of the following can be realized:
- Digital product memory ID(s)
- Access parameters to one or more digital product memories
- Optimisation mean ID
- Duration
- Incentivisation (Terms, Wallet ID, Token Store)

The optimizing process can be e.g. conducted by an optimizing means implemented in the peer-to-peer application. For instance, such an optimizing means can be formed as a smart contract comprising code executable by at least a part of the nodes of the peer-to-peer network.

The optimisation process may use data of a group of components stored in the component storage, such as the digital product memory. A respective group of components can be identified by e.g. assigning individual components to a group and/or by analysing master data stored in existing component storage (e.g. digital product memory) data sets (e.g. look-up of components with a specific geometry, specific input materials, specific manufacturing control data, specific post processing steps, etc.) in order to identify other similar or relevant components that might support the optimisation process by enhancing the size of the data set for the algorithm.

According to a preferred embodiment of the present application, controlling the optimizing process may include controlling at least one off-chain computing device comprising at least one optimizing means configured to conduct the optimizing process. At least the provided component parameter data set may be provided by the controlling means to the optimizing means via a peer-to-peer module assigned to the off-chain computing device. Alternatively and/or additionally, at least the adapted first control data set may be provided by the optimizing means to the peer-to-peer application via a peer-to-peer module assigned to the off-chain computing device. Preferably, a particular powerful off-chain computing device and entity, respectively, can be provided. The peer-to-peer application, in particular, the controlling means may be configured to control the at least one optimizing process conducted by the off-chain computing device. Controlling may include communicating with the off-chain computing device. Controlling may further include monitoring the optimizing process by at least a part (e.g. >2) of the nodes of the peer-to-peer network. Manipulation of the optimizing process can be avoided.

In order to establish a communication between an entity, such as the off-chain computing device, additive manufacturing device, a device comprising a sensor unit, or the like, and the peer-to-peer application, at least one peer-to-peer module may be provided which is, preferably, uniquely assigned to said respective entity.

For instance, each entity of the production system may comprise a separate peer-to-peer module. Preferably, each peer-to-peer module is uniquely assigned to a respective entity (it may also be possible that a peer-to-peer module is assigned to two or more separate entities). For instance, each entity can comprise a peer-to-peer module. Preferably, the peer-to peer module can be integrated in the entity.

It is also possible that a communication connection is provided between the respective entity and a (remotely arranged) peer-to-peer module assigned to said entity. This means that the peer-to-peer module can at least communicate and/or act on behalf of the entity. For example, the peer-to-peer module can be partly formed by a separate processing device, such as mobile communication device (e.g. mobile phone, mobile computer, etc.), or it can run on a remote stationary processing device (e.g. in a data center). In case of a mobile communication device or a remote processing device the at least one entity may have a secure communication channel to the processing device (or mobile communication device) of the data center and the processing device itself may have a connection to the peer-to-peer network. In an embodiment, the remote processing device may be a "gateway" to the peer-to-peer network. This means that the entity can securely communicate via its peer-to-peer module and the gateway to the peer-to-peer network.

Moreover, data, such as control data set(s) and/or component parameter data set(s), can be exchanged between a peer-to-peer module and the peer-to-peer application by exchanging one or more message(s).

Further, the at least one optimizing means may include one or more of the following optimizing tools:
Artificial Intelligence algorithm(s),
Machine learning algorithm(s),
Neuronal networks, etc..

Preferably, an optimizing means may be also configured to take the (later) use (and respective requirements) of the component to be produced into account. For instance, as will be described hereinafter, a product configuration tree can be generated and/or used.

A further embodiment may include a tree structure or a graph which may be stored in a component storage, such as a digital product memory of a product. The product may comprise multiple sub-components which may be stored. For instance, a root component of a product may store addresses of sub-components which might branch into further addresses pointing to further sub-components and so forth.

A component storage, e.g. a digital product memory, may comprise data of the product, (sub-)components, relationships and changes which might be hashed, signed, time-stamped and/or encrypted. This so called product configuration tree can be stored or realized in the peer-to-peer application. The product configuration tree might store dependencies among (sub-)components.

In case that as a result of a optimization process regarding a (sub-)component of a product (such as a car or a plane) is changed the impact of this change may need to be validated in accordance to industry standards and regulatory requirements. The result of the validation including approvals to the optimization measures might to be stored in the product configuration tree for validation reporting purposes.

In a further embodiment, a validation means may be implemented in the peer-to-peer application. The result of an optimization process may be stored in the peer-to-peer application as an unapproved amendment to a (sub-)component in the production configuration tree (amendment not yet part of an approved product design). The validation means may be configured to check the impact of one or more component change(s) proposed by an optimization means to other (surrounding or dependent) component(s) and the whole product itself. The validation process might be automatically triggered by an amendment to a (sub-)component. The result of the validation may be stored in the component storage of the (sub-)component(s). This result can be input for future optimization processes.

In case the validation result is positive the proposed changes to the (sub-) component(s) may be signed by the validation means (or another authorized party) and/or hashed, time stamped and/or encrypted and stored in the peer-to-peer application. As a result of the validation process a new version of a validated product design may be stored in the peer-to-peer application. The validation means can use data and algorithm(s) that are either on- or off-chain.

Furthermore, in order to select the "best" optimizing means e.g. from a group of optimizing means, a data-to-algorithm connection means may be provided. Such a means can be used to enhance e.g. the data set in order to improve output, speed or quality of the optimizing means. The data-to-algorithm connection means may include at least one of the following
- analysis of an optimisation task and/or input parameter(s),
- generation of match parameter(s) (including ranges or patterns of parameters) that describe requirement(s) for data set(s) that can be used to improve the optimisation task
- algorithm(s) that identify/ies existing digital product memory/ies comprising information for the optimisation process e.g. by looking up data in digital product memory/ies in accordance to the match parameter(s)
- address and/or identifier table(s) that can be used to connect an optimisation means with digital product memory/ies of existing component(s) that may be relevant for the optimisation task and/or new components that may be produced with the respective components requirement(s).
- address or identifier table(s) might comprise further parameter(s) and/or metadata about the data in the identified digital product memory/ies as input for the optimisation means,
- address or identifier table(s) may be stored in the peer-to-peer application.

Changes to (sub-)components mayl be recorded in the peer-to-peer application, preferably, in an immutable data store. This may create new design version(s) of a product design, a configuration tree, a sub-tree or a (sub-)component. The hash address of a pervious data sat may be added to the new data set and e.g. hashed. This mechanism in the peer-to-peer application may establishe an immutable configuration and version management process. The peer-to-peer application can include an algorithm for version number creation in the configuration tree.

In order to reduce the risk of an unauthorized imitation of a first component produced by an additive manufacturing apparatus, according to a preferred embodiment, producing the first component may comprise providing the first component with a (unique) identifier. In particular, each produced component can be provided with a different (unique) identifier. The (unique) identifier may be provided to the peer-to-peer application. For instance, a peer-to-peer module of the additive manufacturing apparatus may be configured to provide the identifier to the peer-to-peer application. The (unique) identifier may be stored by the peer-to-peer application. Preferably, the identifier can be stored in a storage arrangement controlled by the peer-to-peer application. In particular, at least the identifier can be stored in an encrypted form. The one or more key(s) needed to read the identifier can be managed by the peer-to-peer application. Managing may include that the peer-to-peer application may be configured to control the access to the storage arrangement and stored one or more identifiers. For instance, the one or more key(s) needed to read the identifier can be (e.g. temporarily) provided to an authorized entity, such as customer entity. The customer entity can check the identity of a first component by comparing the identifier of the first component with the identifier stored by the peer-to-peer application. If the identifier provided to the first component does not correspond to the stored identifier the customer entity knows that the delivered component is not the original component.

According to a preferred embodiment of the method according to the present application, providing the first component with a (unique) identifier may comprise adding a machine-readable identifier code at a specific location of the first component. For instance, at least one production tool, e.g. a laser, may be configured to vary the structure of the first component at a specific location in accordance with the identifier such that the machine-readable identifier code is applied to the first component at a specific location. The machine-readable identifier code may be a micro-code (e.g. may have a size of some µm). The code may be readable by a reading entity, such as an optical reading entity, a X-ray reading entity, etc.

Preferably, the specific location of the machine-readable identifier code may be provided to the to the peer-to-peer application. The specific location of the machine-readable identifier code may be stored by the peer-to-peer application e.g. within the peer-to-peer application or storage arrangement controlled by the peer-to-peer application. For instance, location coordinates or a map of the location of the machine-readable identifier code can be stored. The used coordinate system may depend on the shape of the first component. Also the used coordinate system can be stored together with the identifier. All data can be stored in an encrypted form, as described above. A manipulation, in particular, an imitation of a component is further impeded. In particular, the location of the machine-readable identifier code may be (randomly) varied for each produced (first) component. It shall be understood that the general available area of the component for the location of the machine-readable identifier code may be limited due to technical requirements.

In a particular preferred embodiment of the method according to the present application, adding a machine-readable identifier code at the specific location of the first component may comprise adding a noisy area in the vicinity of the specific location of the machine-readable identifier code. This may include adding a noisy area in the whole component. It has been found that although the exact location of a µ-code may be unknown, unauthorized user might be able to detect the location in order to read and, in particular, imitate the respective component. In order to at least impede this, a noisy vicinity or surrounding of the location of the code can be formed. The size and structure of the vicinity can be randomly formed (according to preset rule(s)). For instance, the border of the noisy vicinity can be set depending on the first component e.g. its structure, form, material, size and/or the location of the code. The at least one producing tool, such as a control unit or a laser, may be configured to form the noisy area using e.g. a random number generator. The random number generator can be an algorithmic or preferably a non-algorithmic random number generator. It shall be understood that technical requirements are thereby taken into account.

In an embodiment, the random number can be generated by the manufacturing apparatus and e.g. mapped/applied to a specific part (location) (or the whole component). The random number, the used mapping algorithm and or the resulting random variation(s) (i.e. the machine-readable identifier code and/or a key and/or the like) in the component can be stored (e.g. in an encrypted form) in the peer-to-peer application and/or a further component storage, such as the digital product memory. As described above, the variation(s) may be machine readable with respective reading entity/ies, such as material analysis tool(s).

The variation(s) can represent for example a binary code (or any other digital code). The component may comprise a machine readable random code (e.g. machine-readable identifier code) that may be defined by the variations in the component and e.g. the mapping algorithm(s). This code can be used e.g. for Vernam cryptography or one-time pad cryptography. Any message (that is shorter than the binary code or in an alternative approach the binary code may be applied several times in the encryption process) can be encrypted with the code of the variation(s) in the component or the binary code of the respective variations that is stored in the digital product memory.

The mapping algorithm and the start address can be varied for the purpose of encryption.

With Vernam cryptography messages, such as a component identifier, component object data or any other message, can now be hidden in the component.

A user with access to the component storage, e.g. the digital product memory, can look-up the binary code stored in the variations, define a mapping algorithm and encrypt a message (e.g. by XOR operations). The encrypted messages together with the mapping algorithm can be sent to a second party or stored in a public accessible storage unit. The second party can decrypt the message by reading out the variation(s), applying the mapping algorithm to generate the binary code (and to identify a start bit) and/or applying the decrypting algorithm to the encrypted message (e.g. XOR operations).

It shall be understood that the encryption process may also work in the other direction from second to first party. It shall be further understood that with this methodology changes in an ID system or any component data or a peer-to-peer application can be implemented independently from the component. The first party may only need to inform the second party about the new encrypted message and/or an new mapping algorithm.

After the component is produced and the random number is stored in the digital product memory a comparison can be done by comparing the random number with the variation(s) read out by a reading entity. The result of the read out data may be stored in the peer-to-peer application.

In case the random binary code is long enough a manufacturer can define a mapping algorithm and an (standard) encryption key for identifiers. Applying the mapping and the (standard) encryption key to the variations of the component may deliver a unique machine readable component identifier (under the assumption that the binary code was produced with random numbers derived from white noise and is long enough to be considered as collision-free). This identifier can also be used to get access to (publicly available data) a component storage, such as a digital product memory.

Error detection and correction technologies (e.g. ECC, FEC) can be further applied to reduce the risks of errors from reading out the variation and/or changes to the variations.

Changes to variations might be detected by any read out process and stored in the digital product memory. In case changes are detected changed encrypted messages might be distributed to second parties. The method can be used to generate and (physically) exchange cryptographic keys by sending a component with variations in a secure way. Mapping algorithms can be exchanges via other communication channels applying additional and / or alternative cryptographic algorithms. It shall be understood that other cryptographic algorithms can be applied.

As previously described, the component parameter data set can comprise one or more parameter values related to the first component. According to an embodiment, the component parameter data set may comprise at least one parameter value of the group comprising:
- at least one starting parameter value related to at least one starting material of the first component,
- at least one component quality parameter value of the first component,
- at least one environmental parameter value related to the environment of the starting material of the first component or the first component during the first production step,
- at least one status parameter value of the additive manufacturing apparatus used to produce the first component, and
- component identifier or key representing the component identifier.

The one or more starting parameter value(s) may be detectable by one or more sensor unit(s). Examples of starting parameter values are material type, structure, shape, density, particle size, provider of the starting material, etc.

Further, one or more quality parameter(s) of an already produced first component and/or of intermediate product(s) of the first component can be detected. For instance, one or more sensor unit(s), e.g. tomography or optical scanning units, can be configured to detect the shape of the produced first component and/or of intermediate products of the first component. A sensor unit, a connected processing device and/or the peer-to-peer application may be configured to analyse the detected shape (e.g. by comparing it with the respective first design data). Further, sensor unit(s) can be provided in form of test device(s) configured to perform predefinable quality tests. A quality testing device can be e.g. configured to conduct at least one (function) test of the (produced) component. The results can be e.g. provided to the peer-to-peer application.

Alternatively or additionally, the component parameter data set may comprise at least one environmental parameter value related to the environment of the starting material of the first component or the first component during the first production step. For instance, a sensor unit may measure the environmental temperature of the storage of the starting material, or the environmental temperature of the additive manufacturing apparatus. Other environmental parameters, such as humidity, air pressure, and the like, which can affect the quality of a produced first component, can be measured and comprised by a component parameter data set.

Also the status of the used additive manufacturing apparatus, such as an error state, the level of wear of one or more producing tool(s), aging of a laser, etc., can be measured and comprised by a component parameter data set.

According to a further embodiment of the method according to the present application, the component parameter data set related to the first component may be stored by the peer-to-peer application together with the identifier of the first component in a component storage. The component storage (e.g. realized by a storage arrangement) may be preferably formed by a data storage controlled by the peer-to-peer application. It may be also possible that the component storage is part of the peer-to-peer application. Preferably, almost all data regarding a component can be stored in the component storage in order to track the lifecycle of the component. Preferably, all data can be stored in an encrypted manner. The peer-to-peer application may be configured to manage the component storage, as described above.

In particular, according to a preferred embodiment, an access to the component storage (e.g. digital product memory) may be controlled by at least one access controlling means of the peer-to-peer application based on an access transaction agreement. The access transaction agreement may comprise at least one identifier of at least one entity authorized to access at least a part of the component storage, in particular, at least one data portion defined in said access transaction agreement.

The peer-to-peer application may be configured to store a generated access transaction agreement. An access transaction agreement may be a smart contract. In particular, the access controlling means may be at least a part of the access transaction agreement. An access process or action is, in particular, a process during which an authorized entity can access, in particular, read a specific amount of data (specific data portion) stored in the component storage of e.g. a storage arrangement controlled by the access controlling means of the peer-to-peer application. An access transaction agreement may comprise at least one identifier of the piece of data (e.g. all data or only part of the total data related to an identifier of a specific component) and one or more identifiers of entities authorized to read (or read and change) said data. In addition, one or more cryptographic key(s) needed to access (and read) the data can be stored in the access transaction agreement. It may be also possible that an access may be only temporarily allowed. In such a case, the access transaction agreement may comprise access conditions (e.g. time conditions comprising e.g. a time duration or a start time and end time). Other access conditions may be possible.

Further, an access criterion may be stored in the access transaction agreement. It may be possible that an access requesting entity has to fulfill one or more access criterion/criteria in order to be allowed to access the respective data portion(s). For instance, the access criterion may be a financial value. Financial values can be (instantaneously) exchanged with a transaction via a cryptocurrency. Escrow functionality can be used to mitigate credit risk of transactions. In an alternative or additional embodiment micropayment channels may be used for a (constant) payment stream that can be handled e.g. partly off-chain to reduce the amount of on-chain transactions. In a further embodiment so called state channels or state networks (e.g. Raiden Network, Lightning Network) may be used to exchange digital tokens off-chain in a secure way. Opening and/or closing of state channels may be registered on the peer-to-peer application. This means that individual transactions may not be stored on the peer-to-peer application in order to improve scalability and avoid movement tracking of pseudonyms on the peer-to-peer application. In an embodiment advanced cryptographic methods may be used to enable anonymous transactions (e.g. zk Proof Systems, Ring Signatures, Mixers, HD Wallets). According to the present application, a man-in-the-middle is not necessary.

The access transaction agreement may be an access transaction agreement between one or more entity(ies) and the peer-to-peer application (and/or one or more further entity(ies)). The generation of the access transaction agreement can be caused or initiated by at least one peer-to-peer module, such as a peer-to-peer module of an entity, for example, by transmitting a request message comprising at least one instruction on the generation of the access transaction agreement. The request message may be sent by the peer-to-peer module in order to at least temporarily access one or more desired data set(s). The request message may include respective information.

In particular, a suitable code and, where necessary, at least one key (e.g. signature) for verifying the sender of a message (e.g. sending peer-to-peer module and/or assigned entity) and/or the authenticity of a message can be transmitted to the peer-to-peer application or written in the peer-to-peer application by the peer-to-peer module. The access transaction agreement may be generated between two or more entities, such as a provider entity of the data portion(s) and one customer entity which desires to read said data portion(s). Preferably, following a confirmation message from the (provider) entity and/or the peer-to-peer application comprising a suitable instruction and, where necessary, at least one key (e.g. signature) for verifying the sender of the confirmation message, a corresponding access transaction agreement can be advantageously generated following a check by the peer-to-peer network of the peer-to-peer application. Expressed in simple terms, each entity can search for one or a plurality of suitable partners by means of the peer-to-peer network or the peer-to-peer application and an access transaction agreement can be generated by means of the peer-to-peer application.

Based on the generated access transaction agreement, the access controlling means may control the access to data portion(s) of the component storage. For instance, an entity may send a message comprising an identifier (in particular, a certificate, signature, or the like) of the requesting entity to the peer-to-peer application. Further data, such as an identifier of the access transaction agreement, the desired data portion(s), etc. can be included in the message. After a positive check result of the identifier of the requesting entity e.g. by comparing the identifier of the message with the identifier(s) of the at least one access transaction agreement access can be granted (e.g. by sending one or more key(s) needed to read said data to the requesting entity and/or by providing the desired data portion(s) to the requesting entity). If the check result is negative, the access can be denied by the access controlling means. In a further embodiment, the access transaction agreement may define access of neural networks (or any other algorithm) to component storage(s).

Preferably, all entities of the production system, such as all additive manufacturing apparatuses, all devices comprising one or more sensor unit(s), all customer entities (e.g. any kind of computing device), etc., may be registered in the peer-to-peer application. According to an embodiment of the present application, the method may comprise:
- receiving a registering message by a registering means of the peer-to-peer application from a peer-to-peer module assigned to an entity,
- wherein the entity is registered in the peer-to-peer application by storing a peer-to-peer identifier of the entity.

The registering means of the peer-to-peer application may be configured to receive a registering message of a peer-to-peer module assigned to an entity. The registering means may be configured to register the entity (e.g. an additive manufacturing apparatus, device comprising a sensor unit, customer entity, etc.) by storing an unique (peer-to-peer) identifier. The peer-to-peer identifier can be stored in an identifier list. Preferably, the identifier list can be stored in the peer-to-peer application and/or a storage arrangement controlled by the peer-to-peer application. The identifier list can be used by the peer-to-peer application for verifying e.g. a sender of a message. Preferably, each message can comprise an identifier which can be checked by at least part of the nodes based on the identifier list comprising the identifiers of all registered entities. Thereby, the security of any process conducted and/or controlled by the peer-to-peer application can be further increased.

More particularly, an entity including a user, device, unit, apparatus, or the like can be registered in the peer-to-peer application, as e.g. a so called smart asset. Each registered entity can be stored with its unique (peer-to-peer) identifier e.g. in one or more identifier list(s) of authorized entities. An identifier of an entity might be already a peer-to-peer identifier or another identifier suitable to uniquely identify the entity. The unique peer-to-peer identifier may be a serial number or a smart asset hash of e.g. the entity, the user's name of the entity, a communication address of an entity, a signature, etc. If e.g. an identifier of an entity is not already a unique peer-to-peer identifier, e.g. if the identifier is non-unique name of a user, the peer-to-peer application, in particular, the registering means, may be configured to generate an unique peer-to-peer identifier for the respective entity (according to preset rule(s)).

It shall be understood that an entity may be an (autonomous) device.

It shall be understood that an entity can be a user registered in the peer-to-peer application. Each registered user can be stored with or linked to its unique (peer-to-peer identifier) e.g. in one or more identifier list(s) of authorized entities. According to an embodiment of the method according to the present invention, a user may authenticate himself at one of the devices, such as a customer entity.

Prior to the registering of an entity (e.g. testing device, other device comprising a sensor unit, additive manufacturing apparatus, etc.), at least part of the nodes (peers) of the peer-to-peer network may check, in particular, by executing the registering means, whether registering requirements (such as specific entity specifications or valid signatures or compliance requirements) predefined by the peer-to-peer network are met by the entity requesting registering. For instance, it may be necessary that an additive manufacturing apparatus or a testing device meets predefined technical specifications. In order to perform the check, preferably, further data may be included in the registering message. In particular, the peers of the peer-to-peer network may provide registering rules or registering requirements which must be fulfilled by an entity to be regarded as a trustful entity. Rules/requirements may be individually defined by the peers of a peer-to-peer network. E.g. it may be necessary that a new entity must be recommended by an entity which is already a participant of the peer-to-peer network. In addition, it may be necessary that this participant must have a reputation factor which increases a predefined minimum reputation factor. For instance, if a user has a low reputation factor e.g. due to detected non-payment of (some) invoice(s), the user or its customer entity may not be registered by the registering means. In a similar way, additive manufacturing apparatuses having a low reputation factor e.g. due to produced components having a low quality (below a predefined threshold) may be not registered by the registering means.

According to a further preferred embodiment, the at least one peer-to-peer application can be a decentralized register or a shared database configured to store data, e.g. assignment transaction agreement(s), identifier(s), control instruction data set(s), etc., with given certain proofs or signatures. In addition to e.g. identifiers, the decentral register can store computer code acting as e.g. controlling means, first forecasting means, second forecasting means or registering means. In particular, the code can be invoked by a transaction to the address of the code in so called 'smart contracts'. This code can be processed on the plurality of node(s) of the peer-to-peer network.

As described hereinbefore, the optimizing means may include algorithm(s) for de-central cognitive analytics, artificial intelligence, neural networks, or machine learning. Analytics and learning can be shared with other devices, aggregated and further analyzed via the peer-to-peer applications.

A decentralized register can be readable at least by a part of the participants of the peer-to-peer network. In particular, every computer node and each registered entity (by means of the respective peer-to-peer module) can comprise the peer-to-peer application. The decentralized register, at least its public part (i.e. may be without private contracts), may be read at least by each participant of the peer-to-peer network. In particular, all peer-to-peer modules and all other computers of the peer-to-peer network can preferably read all information in the peer-to-peer application formed as a register. Preference is also that all peer-to-peer modules and all other computers of the peer-to-peer network can send messages to or write messages to the peer-to-peer application.

A message or transaction sent to a smart contract may start the execution of a code of the smart contract (e.g. registering means, controlling means, access controlling means, optimizing means, etc.) while using data stored in the smart contract. For instance, sending at least one component parameter data set to a controlling means may start the execution of the code resulting in e.g. initiating and at least controlling an optimizing process, as described hereinbefore.

The peer-to-peer application can be built upon the following elements: peer-to-peer network comprising Consensus System and/or Protocol, Data Structure, Merkle Trees, Public Key Signatures, Byzantine Fault Tolerance. It may replicate data based on a consensus principle. It may be auditable and traceable.

In a simple way information can be made available to preferably all participants. This may allow to carry out a review of the information stored in the decentral register or the code executed in the decentral register. Particularly preferably, each computer (node) in the peer-to-peer network can be configured to review new information, in particular, based on older information stored in the peer-to-peer application. In addition, the at least one controlling means may be monitored by at least a part of the nodes of the peer-to-peer network, preferably by all nodes. A manipulation of a controlling means can thus be prevented, at least detected.

Moreover, at least a plurality of nodes, preferably each node can in each case comprise the complete data content, but include at least a portion of the data contents of the peer-to-peer application, in particular of the decentral register. For example, it may be provided that after a positive verification of written information or e.g. a positive registering in the peer-to-peer application this information is saved by all nodes, at least by a part of the computers. For instance, after the generation of an access transaction agreement and/or after a successful registering, the agreement and (new) identifier, respectively, can be stored at least by a part, preferably all nodes of the peer-to-peer network. The tamper resistance of the data stored in the peer-to-peer application can thereby be further improved. Each action can be securely controlled.

In order to store new information in a tamper-proof way, the peer-to-peer application can comprise encryption means and/or signature means and/or verification means, wherein at least one of the encryption means and/or signature means and/or verification means is configured to store data, such as an access transaction agreement (s), identifier(s), location data, component parameter data set(s), etc. In particular, it can be provided that by the hash function a link is established with at least one previously stored information in the decentral register. Further data, such as request messages, ordinary, contextual and/or transaction data of an entity, such as a provider entity, can be stored.

The peer-to-peer application may be formed by a Directed Acyclic Graph (DAG). A directed acyclic graph, such as IOTA or Tangle, means that blocks (or nodes of the graph) are coupled to each other via directed edges. Thereby, direct means that the (all) edges have (always) a same direction similar to time. In other words, it is not possible to step back. Eventually, acyclic means that loops do not exist.

In a particularly preferred embodiment of the present method, the peer-to-peer application can be a block chain or decentral ledger comprising at least two blocks coupled to each other (e.g. Ethereum Block chain with Smart Contracts). The block chain technology or "decentral ledger technology" is already used in the payment by means of a crypto currency, such as Bitcoin. It has been recognized that by a particular configuration of a block chain, additive manufacturing processes can be improved by using the block chain in order to control optimizing process. Thereby, due to the block chain, the optimizing process can be securely performed. E.g. a controlling means can be easily implemented as a smart contract in a block chain.

In addition, the block chain can be used to generate predefined action(s) caused by at least one peer-to-peer module and/or a controlling means in a tamper-proof manner. The block chain according to the present embodiment is particularly a decentralized, peer-to-peer-based register in which all data related to at least one controlling process can be logged. A block chain is particularly suitable as a technical means to replace a central entity/server in a simple and secure manner.

In further embodiments of the peer-to-peer application, the block chain can be a permissionless or permissioned block chain. In a specific case the block chain can be public, consortium or private block chain.

In a further embodiment, the peer-to-peer application can be formed by multiple block chains which are connected via mechanisms, such as side chains or smart contracts. A peer-to-peer node can run one or more different block chain client (s).

Data of the peer-to-peer application, such as data related to a produced component, can be stored on the "decentral ledger technology" and/or the decentral ledger steers (encrypted) data storage arrangements (e.g. comprising one or more component storage(s)) accessible via the internet and preferably in de-central data storage arrangement, object store and database, respectively, such as Interplanetary File System (IPFS) or storj or in a distributed Blockchain database (e.g. BigChainDB). Access to encrypted data to third party entities is managed via the access control means formed as one or more smart contract(s) on the block chain.

In addition, data feeds can be provided by the peer-to-peer application (so called "smart oracles"). Data feeds can provide further data relating to an additive manufacturing action from at least one further source. For instance, further weather environmental data or the like can be provided by a meteorological provider or the like. Data can be captured from trusted sources off-chain and stored on the block chain or stored via the block chain on a decentral data storage entity.

Information among peer-nodes can be exchanged by a peer-to-peer messaging system. This means a peer node can send a message to another peer node to submit an information or to trigger an action. Messages can be clear text, signed, hashed, time-stamped and/or encrypted. This means that not all data exchanged among peer nodes must be stored on the block chain.

In a further embodiment, the at least one peer-to-peer network can be formed by a plurality of computer nodes and a peer-to-peer module, such as the first peer-to-peer module of a controllable producer, the further peer-to-peer module of a non-controllable producer, etc. A peer-to-peer module may be only configured to communicate with the plurality of computer nodes. In other words, the peer-to-peer module is not a computer node of the peer-to-peer network but only a participant. Such a peer-to-peer module does not comprise the peer-to-peer application but only provides an interface module, such as an application programming interface (API), and a decentral application for communication with the computer nodes of the peer-to-peer network or the peer-to-peer application, such as a block chain or a smart contract on the block chain. For instance, such a peer-to-peer module can either send clear text or encrypted information or generate a secure connection (e.g. tunnel) to a peer-to-peer gateway (or so called "remote node") in order to communicate with the peer-to-peer network. This allows reducing the required processing power of the peer-to-peer module.

In one implementation of the peer-to-peer network, there can be only one validating peer or full node, e.g. only one node can be configured to perform a controlling process and one or more observing (or monitoring) node(s). An observing node can validate transactions to establish a trust level but does not validate all transactions which is done by the validating peer.

In a further embodiment, the peer-to-peer module is one of the nodes. In this case, the peer-to-peer module comprises at least a part of the peer-to-peer application. In particular, the peer-to-peer module can comprise preferably the total data content of the peer-to-peer application or can access the information stored in another node. For instance, the peer-to-peer module might be a so called "light node" or a decentral application (DAPP) connected to a remote node.

It is noted that in the present case, according to an embodiment, the peer-to-peer module comprises at least an API configured to communicate with the peer-to-peer application, such as the block chain. In addition to the API, the peer-to-peer module comprises a decentral application of software comprising local algorithms at least configured to create and transmit data, such as forecasting data, etc., via the API. The decentral application so called "Dapp" is at least configured to process and transmit said data.

Preferably, the data is signed or encrypted or can be transmitted via a cryptographically secured tunnel or a secured internet connection to a peer-to-peer node running the peer-to-peer application, such as the block chain. In another particular embodiment, also the peer-to-peer application itself is implemented in the peer-to-peer module, i.e. the peer-to-peer module is a node of the peer-to-peer network comprising the decentral application, the API and the peer-to-peer application, such as the block chain or decentral ledger.

Data and transactions stored on the block chain do not provide "transactional privacy". Transactions between pseudonyms may be (often) stored in clear text on the block chain. In some cases data stored on the block chain are encrypted and the keys may be handled via the block chain. Transactions between pseudonyms are stored in clear text on the block chain. Privacy preserving, secure transactions or execution of computer code can be achieved with cryptographic tools such as zero knowledge (zk) proofs or zk Succinct Non-interactive Arguments (zk-SNARK). Transactions or algorithms are separated into two parts: a smart contract on the block chain and a private contract. A privacy preserving protocol ensures the privacy of data and the correctness of code execution (SNARK verification is done via the smart contract on chain). The private contract computation can be done by a set of nodes, off-chain computers or done in measured launch environment or a secure hardware enclave for attestation and sealing that cannot be manipulated by other software code running on the devices. In an alternative embodiment, secure Multi-Party-Computing (sMPC) systems can be used for transactional privacy. Examples for privacy preserving protocols and computation are HAWK and MIT Enigma. Preferably, the optimizing means can be formed by one of these techniques.

With zero knowledge proof (zk Proofs) the parties can see that the algorithm is executed correctly in a private contract, but the input data are not disclosed to the party. In addition, selective privacy can be achieved by sharing keys to decrypt transactions for reporting and auditing purposes.

To securely deploy code and or data into a device a trusted execution environment, such as Intel SGX or TPM or Direct Anonymous Attestation module, can be integrated with a peer-to-peer module.

Similarly, in a further embodiment, a particularly large peer-to-peer network may be divided in two or more (physical or logical or dynamically virtual) cluster(s). In a corresponding peer-to-peer network, for example, a validation (of a subset of transactions) may only be carried out by the members of one cluster (a subset of nodes; e.g. sharding of a block chain to improve the scalability). In a further embodiment, the peer-to-peer application can be formed using multiple block chains. These block chains are connected via frameworks such as sidechains or smart contracts.

A further aspect of the present invention is a production system according to independent claim 14.

Controlling the at least one optimizing process at least based on the provided component parameter data set and the first control data set such that the first control data set is adapted means that the optimizing process is conducted based on the input parameters in form of at least one component parameter data set and at least the (currently) used control data set. Further data can be taken into account.

The production system, in particular, an additive manufacturing system, can be, preferably, operated in accordance with the above described method.

A further aspect is an additive manufacturing apparatus. The additive manufacturing apparatus comprises at least one producing tool configured to produce at least one first component based on at least one first control data set. The additive manufacturing apparatus comprises at least one peer-to-peer module configured to provide at least one component parameter data set related to the first component to least one peer-to-peer application of at least one peer-to-peer network.

The peer-to-peer module is configured to receive an adapted first control data set from the peer-to-peer application such that the first component and/or a further first component is produced by the producing tool in accordance with the adapted first control data set. The adapted first control data set is adapted according to an optimizing process. The optimizing process is based at least on the at least one component parameter data set and the first controlling data set. The optimizing process is controlled by a controlling means of the peer-to-peer application.

The additive manufacturing apparatus may be a part of the previously described production system.

A further aspect is a peer-to-peer application of a peer-to-peer network, in particular, for the previously described production system. The peer-to-peer application comprises at least one controlling means configured to control at least one optimizing process such that the first control data set is adapted. The optimizing process is at least based on at least one component parameter data set related to at least one first component produced by at least one additive manufacturing apparatus in accordance with at least one first control data set. The controlling means is configured to provide the adapted first control data set to the additive manufacturing apparatus via at least one peer-to-peer module assigned to the additive manufacturing apparatus.

It shall be understood that the controlling means can be formed by two means, such as one means for controlling the optimizing process and one means for providing the adapted first control data set to the additive manufacturing apparatus.

A still further aspect is a component, wherein the component is manufactured according to an additive manufacturing method, in particular, according to the previously described method. The component comprises at least one machine-readable identifier code at at least one specific location of the component. The vicinity of the machine-readable identifier code is a noisy area.

The vicinity and surrounding of the location of the machine-readable identifier code (e.g. in form of a random number that is stored in the component) may be predefined e.g. by respective rule(s). In one embodiment, the whole component is a noisy area (except the machine-readable identifier code (e.g. specific variations)). At least minimum and maximum distances of the border(s) of the vicinity and surrounding, respectively, may be predefined. Based on the rules (e.g. comprising a random process, the specific vicinity, e.g. its dimensions can be determined, preferably, individually for each component. The machine-readable identifier code may be a 2D or 3D code, in particular, µ-code. Further, the vicinity and surrounding, respectively, may have 2D or 3D dimensions.

Furthermore, one embodiment may include mapping algorithm(s) to create a random number from variations - stored in the component - and the variations themselves might be stored in the peer-to-peer application.

It shall be understood that the implementation of a product configuration tree and/or the validation means can also be applied for changes that are proposed for one or more (sub-)components by other parties. A validation transaction agreement may comprise at least one of the following elements identifier and/or address of a product configuration tree, validation requirements, alidation approval rules.

It shall be understood that the above description can be generally applied for any manufacturing technology that is transforming input material via physical, chemical or biological processes into a component (e.g. robots, CNC, etc). The method can be applied for cyber physical manufacturing systems (CPS) including existing systems that are retrofitted with one or more so called CPS modules. The CPS module can be connected with a peer-to-peer module to a peer-to-peer application for analyzing and optimizing the manufacturing process.

The features of the methods, systems, modules, peer-to-peer applications, additive manufacturing apparatuses, components and computer programs can be freely combined with one another. In particular, features of the description and/or the dependent claims, even when the features of the dependent claims are completely or partially avoided, may be independently inventive in isolation or freely combinable with one another.

These and other aspects of the present patent application become apparent from and will be elucidated with reference to the following figures. The features of the present application and of its exemplary embodiments as presented above are understood to be disclosed also in all possible combinations with each other.
- Fig. 1: a schematic view of an embodiment of a production system according to the present application,
- Fig. 2: a schematic view of a further embodiment of a production system according to the present application,
- Fig. 3: a schematic view of an embodiment of a component according to the present application,
- Fig. 4: a schematic view of a further embodiment of a production system according to the present application,
- Fig. 5: a schematic view of an embodiment of a peer-to-peer application according to the present application,
- Fig. 6: a schematic view of an application embodiment of a production system according to the present invention, and
- Fig. 7: an embodiment of a method according to the present application.

Like reference numerals in different figures indicate like elements.

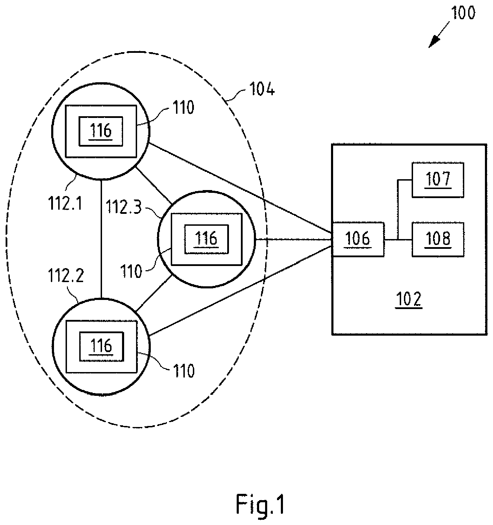

Figure 1 shows a schematic view of an embodiment of a production system 100 according to the present application. The depicted production system 100 comprises at least one additive manufacturing apparatus 102 and at least one peer-to-peer network 104. The additive manufacturing apparatus 102 comprises at least one producing tool 108 (also called processing tool) configured to process and treat, respectively, at least one starting material in order to create a first component. The additive manufacturing apparatus 102 may be, in particular, a 3D printer 102 configured to process a starting material by forming successive layers of the starting material to create the component.

The at least one processing tool 108 may depend on the technology used by the additive manufacturing apparatus 102. For instance, the processing tool 108 may e.g. comprise a printer nozzle set controlled in accordance with a first control data set. The producible first products and first components, respectively, can be of almost any shape or geometry. For instance, a controller of the at least one producing tool 108 may receive a first control data set of a 3D model of the first component to be produced. Based on such a control data set, the controller can control the producing tool 108 such that the desired first 3D component corresponding to the 3D model of the control data set is produced. The present 3D printer 102 may be a type of industrial robot.

Furthermore, in the present embodiment the additive manufacturing apparatus 102 comprises at least one sensor unit 107. The sensor unit 107 may comprise one or more sensor(s). Each sensor may be configured to detect or measure at least one component parameter value related to the component to be produced or the component currently produced or the (already) produced component.

The production system 100 comprises a peer-to-peer module 106 assigned to the additive manufacturing apparatus 102. In the present embodiment, the peer-to-peer module 106 assigned to the additive manufacturing apparatus 102 is integrated in the additive manufacturing apparatus 102.

A substantial difference compared with prior art techniques is that no central instance and/or third party organization is provided. In the present case, the production system 100 comprises a peer-to-peer network 104 or a computer-computer network 104. The peer-to-peer network 104 comprises a plurality of nodes 112.1, 112.2, 112.3 and computers 112.1, 112.2, 112.3, respectively. A peer-to-peer network 104 is characterized in the present case in that each node 112.1, 112.2, 112.3 and/or participant 106 is preferably connectable at least to every other node 112.1, 112.2, 112.3 and/or participant 106.

For instance, at least one physical standard network (wired and/or wireless) can be used for connection. For communicating via the at least one physical standard network suitable transceiver modules may be arranged in the respective entities/devices.

In addition, the computers 112.1, 112.2, 112.3 have equal rights, something which distinguishes them from a server-client structure.

The depicted nodes 112.1, 112.2, 112.3 (each) comprise a peer-to-peer application 110. As can be seen from figure 1, the same peer-to-peer application 110 is preferably implemented on each node 112.1, 112.2, 112.3. This means, in particular, that the same content is comprised on each node 112.1, 112.2, 112.3 and that the same code (e.g. controlling means 116 in form of a smart contract) can be executed on each node 112.1, 112.2, 112.3.

The peer-to-peer application 110 may preferably be a public register 110 or a decentral ledger 110 that can, in particular, be inspected by all participants 112.1, 112.2, 112.3, 106 (not only the nodes 112.1, 112.2, 112.3) of the peer-to-peer network 104. Each node 112.1, 112.2, 112.3 preferably has the (entire) public register 110. It may also be envisaged that only part of the register can be provided on a node (light node). In a particularly preferred embodiment, the peer-to-peer application 110 may be a block chain 110 which will be explained in more details hereinafter. It shall be understood that the peer-to-peer network may comprise further nodes. In addition, it shall be understood that also an additive manufacturing apparatus can be formed as a node of the peer-to-peer network.

The peer-to-peer network 104 is configured to provide an optimizing option for one or more production process(es) conducted by the additive manufacturing apparatus 102. The peer-to-peer application 110 may be configured to manage and control a production process and production steps, respectively. In particular, the peer-to-peer application 110 may comprise a controlling means 116. The controlling means 116 may be configured to control an optimizing process e.g. conducted by an (not shown) optimizing means. In particular, the optimizing means can be configured to adapt, in particular, optimize a control data set used by the additive manufacturing apparatus 102 for producing component(s). By optimizing the control data set the rejection rate can be significantly reduced. Since the controlling of the at least one optimizing process is realized by a peer-to-peer application 110, the optimizing process can be conducted in a secure manner. Manipulations can be avoided.

More particularly, a peer-to-peer module 106 is (generally) configured to communicate at least with the peer-to-peer network 104, i.e. the nodes 112.1, 112.2, 112.3 of the peer-to-peer network 104. In other words, the peer-to-peer module 106 or the additive manufacturing apparatus 102 corresponding and/or assigned to the respective peer-to-peer module 106 is at least a participant of the peer-to-peer network 104. Preferably, all participants 112.1, 112.2, 112.3, 106 (including all nodes) of the peer-to-peer network 104 are known to each participant 112.1, 112.2, 112.3, 106 of the peer-to-peer network 104.

In the present case, the peer-to-peer module 106 is not a node of the peer-to-peer network 106 but only a participant 106. While nodes 112.1, 112.2, 112.3 in the peer-to-peer network 104 comprise at least a part of the peer-to-peer application 110 itself, a participant of a peer-to-peer network 104, like the present peer-to-peer module 106, does not comprise the peer-to-peer application 110. Such a peer-to-peer module 106 is configured to provide (only) access to the peer-to-peer application 110 e.g. via an API (application programming interface). Each peer-to-peer module 106 (also a node or light node) may comprise a decentral application and at least an API.

In the case, the peer-to-peer module is formed as a node of the peer-to-peer network the peer-to-peer module (also) comprises at least partly the peer-to-peer application 110. It shall be understood that a peer-to-peer module 106 might be a node of the peer-to-peer network. It shall be understood that a peer-to-peer module 106 may have access or may be connected to a "gateway" running a node of the peer-to-peer network.

The peer-to-peer module 106 may comprise a communication connection to the at least one producing tool 108 and at least one sensor unit 107. The peer-to-peer module 106 may transmit, e.g. write, at least one component parameter data set comprising one or more (current) component parameter value(s) to the peer-to-peer application 110. The least one component parameter data set may be received by the peer-to-peer module 106 from the sensor unit 107. In particular, the controlling means 116 may be configured to further process the received component parameter data set. In addition, the peer-to-peer module 106 may provide the currently used control data set to the peer-to-peer application 110. The least one currently used control data set may be received by the peer-to-peer module 106 from the producing tool 108. It may be also possible that the peer-to-peer application 110 is already informed about the used control data set.

Further, the first peer-to-peer module 106 may be configured to receive data, e.g. an adapted control data set, from the peer-to-peer application 110. For instance, the peer-to-peer module 106 may receive one or more message(s) and/or may be allowed to read out data intended for said peer-to-peer module 106 (e.g. due to a respective identifier). For instance, an adapted control data set received from the peer-to-peer application 110 can be forwarded from the peer-to-peer module 106 to the at least one producing tool 108 in order to operate said producing tool 108 in accordance with the adapted control data set.

Providing of the adapted control data set to a peer-to-peer module 106 may be caused or initiated by the controlling means 116. The controlling means 116 can be at least executed by a part (two or more) of the nodes 112.1, 112.2, 112.3 of the peer-to-peer network 104. Since at least a part (preferably, a plurality) of the nodes 112.1, 112.2, 112.3 is involved (and not only a single computer) a manipulation risk can be significantly reduced without needing a central instance, such as a server.

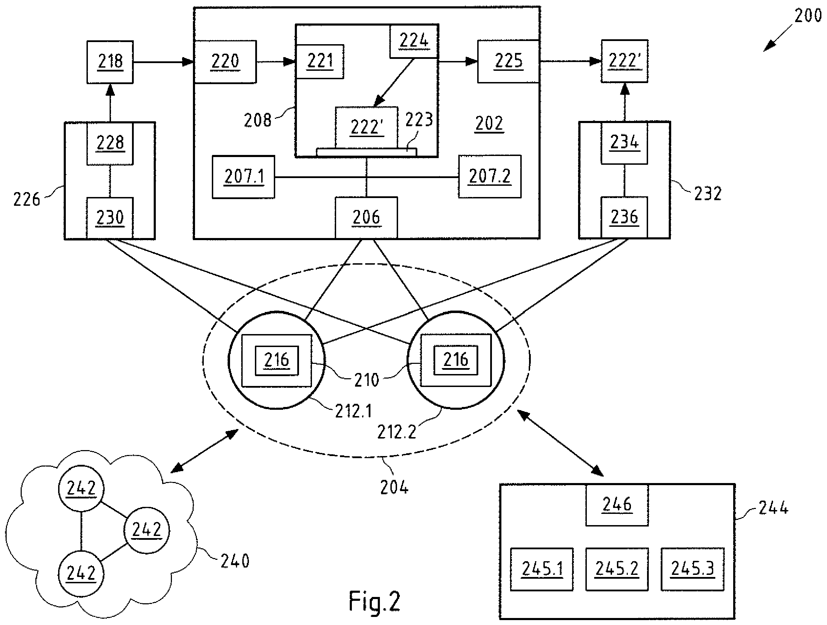

Figure 2 shows a schematic view of a further embodiment of the production system 200 according to the present application. The production system 200 comprises an additive manufacturing apparatus 202 interconnected with a peer-to-peer network 204.

The depicted additive manufacturing apparatus 202 may be a DLS or SLS (Direct or Selective Laser Sintering) apparatus 202. Such an additive manufacturing apparatus 202 involves the use of a high power laser 224 (for example, a carbon dioxide laser) to fuse a starting material 218 in form of small particles of plastic, metal, ceramic, or glass powders into a mass that has a desired three-dimensional shape, i.e. the component.

In order to supply the at least one starting material 218 to the at least one producing tool 208 comprising said at least one laser 224, the additive manufacturing apparatus 202 comprises at least one inlet unit 220. The inlet unit 220 may be configured to forward the starting material 218 to an applying unit 221. The laser 224 may selectively fuse the powdered starting material on the surface of a powder bed 223. After a powder layer has been treated by the laser 224, the powder bed 223 may be lowered by one layer thickness, a new layer of material may be applied by the applying unit 221 on top, and the process is repeated until the component 222 is completed. Thereby, the different units/elements of the producing tool 208, e.g. the lased 224, the applying unit 221 and the movable powder bed 223, are preferably operated in accordance with a control data set. The control data set may be based on a CAD file or scan data set of the component to be produced. The produced component 222 may be provided to a further unit via an inlet unit 225.

As can be further seen from figure 2, several (exemplified) sensor units 207.1, 207.2, 228, 234 are provided. Two sensor units 207.1, 207.2 are presently integrated in the additive manufacturing apparatus 202. For instance, a first sensor unit 207.1 may comprise one or more optical sensor(s) (e.g. camera(s)) configured to detect the currently produced first component 222' (from the first to the last layer). In particular, a camera can capture picture(s) from intermediate products 222' and intermediate states 222', respectively, of the component 222' currently produced. The captured pictures can be analyzed e.g. by comparing the pictures with the desired 3D-design.

A further sensor unit 207.2 may comprise one or more sensor(s) e.g. configured to measure at least one environmental parameter value (e.g. temperature) and/or to monitor the status of the additive manufacturing apparatus 202, e.g. the producing tool 208. The sensor units 207.1, 207.2 are coupled with the peer-to-peer module 206. The peer-to-peer module 206 assigned to the additive manufacturing apparatus 202 is configured to communicate with the peer-to-peer application 210, as described hereinbefore.

A further sensor unit 228 may be integrated in a stand-alone device 226. The further sensor unit 228 may be configured to detect at least one component parameter value of the starting material 218 (e.g. particle size of the used starting material 218, ingredients of the starting material 218, provider of the starting material 218, etc.). A further peer-to-peer module 230 may be assigned to the sensor unit 228, in particular, integrated in the stand-alone device 226. The peer-to-peer module 230 may be configured to forward the detected and/or measured parameter values.

Further one or more testing device(s) 232 comprising a sensor unit 234 may be provided. A testing device 232 may test a produced first component 222. For instance, a testing device 232 (e.g. by means of the sensor unit 234) may be configured to conduct at least one test (e.g. optical test(s) regarding deviation from the original 3D-design, breaking test(s), functional test(s), etc.). The test result(s) in form of one or more component parameter value(s) can be provided to the peer-to-peer application 210 via a peer-to-peer module 236 assigned to a testing device 232.

In the present embodiment, for sake of clarity, only two nodes 212.1, 212.2 of the peer-to-peer network 204 are depicted. It shall be understood that the peer-to-peer network 204 may comprise a plurality of nodes.

The controlling means 216 of the peer-to-peer application 210 may be configured to control an optimizing process. Controlling may include the collection of one or more component parameter data set(s) from the one or more peer-to-peer module(s) 206, 230, 236. Further, controlling may include forwarding one or more of the received component parameter data set(s) to one or more optimizing means 245.1, 245.2, 245.3.

In the present embodiment, at least one off-chain computing device 244 comprising a plurality of optimizing means 245.1, 245.2, 245.3 including neuronal networks, artificial intelligence, etc. may be provided. The controlling means 216 may be configured to control and manage the off-chain computing device 244 via a peer-to-peer module assigned to the off-chain computing device 246.

Controlling an optimizing process may further include the receipt of an optimizing result in form of an adapted (first) control data set. The controlling means 216 may be configured to forward the adapted (first) control data set to the additive manufacturing apparatus 202 via the peer-to-peer module 206.

Preferably, the optimizing process(es) (e.g. in accordance to requirements of a product configuration tree) is/are conducted several times until a desired result is achieved. Also validation process(es) can be conducted several times. For instance, an optimizing process can be initiated each time a new component parameter data set is forwarded to o one or more optimizing means 245.1, 245.2, 245.3 via the peer-to-peer module 246.

Further, a storage arrangement 240 is provided. Data can be stored in the peer-to-peer application 210 and/or in the storage arrangement 240 controlled by the peer-to-peer application 210. Preferably, the storage arrangement 240 comprising a plurality of decentral storage units 242 may be formed as a decentral file system (such as IPFS) or a decentral object store (such as storj) or a decentral distributed database (such as BigchainDB) controlled by the peer-to-peer application 210. For instance, an identifier list of all entities registered in the peer-to-peer application 210, a component storage, etc., can be stored in and/or formed by the storage arrangement 240. Controlling the storage arrangement 240 comprises controlling the read and write privileges of the storage arrangement 240. Preferably, at least one access controlling means of the peer-to-peer application 210 can be provided, as described hereinafter.

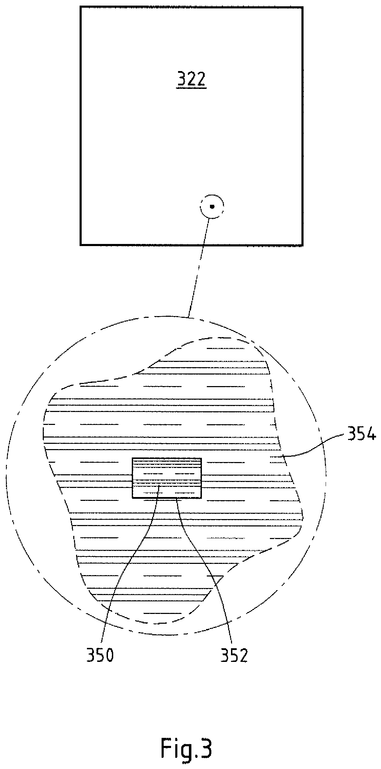

Figure 3 shows a schematic view of an embodiment of a component 322 according to the present application. For instance, the component 322 can be created by a previously described production system 200. It is noted that the component 3200 can be an arbitrary component with an arbitrary shape, size, etc.

As can be seen from figure 3, the component 322 is provided with an identifier in form of a machine-readable identifier code 350. In particular, the machine-readable identifier code 350 corresponds to a formerly generated identifier. As indicated in figure 3, the machine-readable identifier code 350 may be preferably a µ-code readable e.g. by an optical reading device, an X-ray reading device, etc.

The machine-readable identifier code 350 can be added to the component 322 by the producing tool (e.g. 208) of an additive manufacturing apparatus. Preferably, a generation means (e.g. of the manufacturing apparatus, peer-to-peer application, further generation entity) may generate the unique identifier to be provided to the component 322 to be produced. Thereby, generating the unique identifier may include determining an individual location 352 for application of the machine-readable identifier code 350 at the component 322.

According to a particularly preferred embodiment, the surrounding area 354 can be made noisy. In other words, a noisy area 354 in the vicinity 354 of the location 352 of the machine-readable identifier code 350 can be added by the producing tool (e.g. 208) of an additive manufacturing apparatus.

The specific location 352 can be defined by suitable coordinates, wherein the coordinate system may depend on e.g. the shape of the component 322.

Based on the generated identifier, the specific location 352 of the code and its surrounding area 354 to be made noisy, the control data set can be adapted such that the component 322 is provided (by the producing tool) with a machine-readable identifier code 350 (corresponding to the generated (unique) identifier) at the desired location 352 with a noisy surrounding 354.

It shall be understood that also the whole area or the whole component can be made noisy. This is especially useful if Vernam or one-time pad cryptography are used maybe in combination with location data or a mapping algorithm.

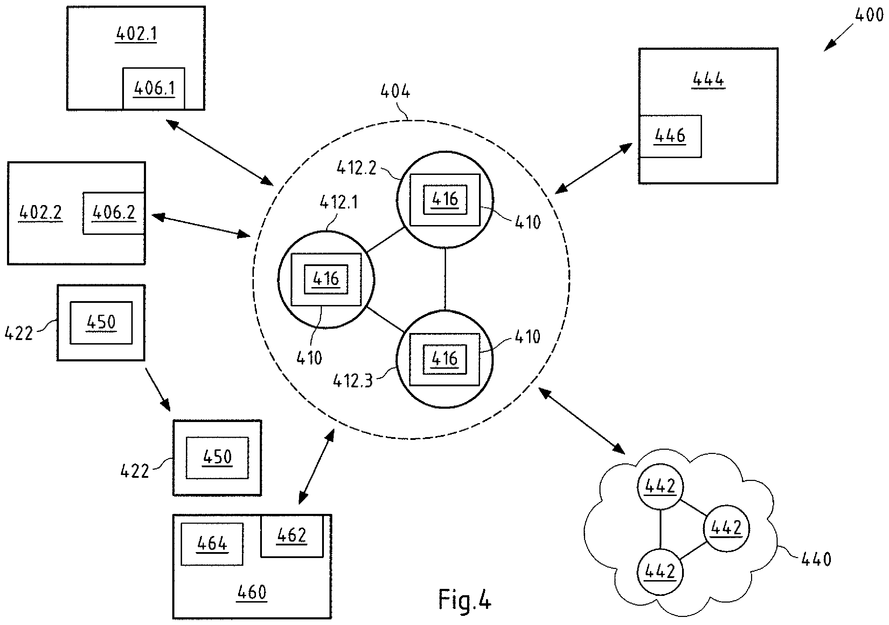

Figure 4 shows a schematic view of a further embodiment of a production system 400 according to the present application. The depicted production system 400 comprises a first additive manufacturing apparatus 402.1, a further additive manufacturing apparatus 402.2, a peer-to-peer network 404, an off-chain computing device 444, a storage arrangement 440 and a customer entity 460. For avoiding repetitions, the already described elements, such as additive manufacturing apparatuses, off-chain computing device 444, a storage arrangement 440 and peer-to-peer network, are not described in all details but it is referred to the above explanation. Thereby, details, such as producing tools or the like has been omitted for sake of clarity.

The customer entity 460 may be a computing entity 460 of a user. Non-exhaustive examples of computing entities are mobile terminals (e.g. smart phone, tablet computer, a wearable device), personal computers, home automation controllers, smart TVs, etc. A peer-to-peer module 462 is assigned to the customer entity 460. In the present example the peer-to-peer module 462 is integrated in the customer entity 460.

Preferably, the peer-to-peer application 410 is configured such that the user of the customer entity 460 can request the production of one or more first components 422 via the peer-to-peer application 410. For instance, the peer-to-peer module 462 can cause the generation of a production transaction agreement about the production of a first component 422 with a provider of the (selected) additive manufacturing apparatus 402.1, 402.2 and/or a provider of the respective 3D design data needed for said first component 422. In the production transaction agreement, all details about the production of one or more first component(s) 422 can be defined and stored by the peer-to-peer application 410.

For instance, a product transaction agreement can comprise the following data:
- Desired component:: product to be produced by an additive manufacturing apparatus including e.g. input for control data sets such as designs, software to be deployed and customization parameters
- Time indication:: desired reception date of the produced component by the requester
- Transaction criterion:: criterion that must be met by another unit/provider to complete a production transaction agreement about the specified component and time indication
- Quality criterion:: requirement(s) for testing, quality assurance and/or validation.

The peer-to-peer application 410 can control the production of the first component 422 based on the production transaction agreement. For instance, the peer-to-peer application 410 can cause transmitting of a 3D control data set corresponding to said first 3D component 422 to the respective additive manufacturing apparatus 402.1, 402.2 (e.g. via the peer-to-peer module 406.1, 406.2).

The production of one or more first component(s) 422 may be e.g. conducted by the first additive manufacturing apparatus 402.1. During the one or more processing step(s), the control data set can be adapted, in particular, optimized such that one or more (depending to the ordered number of components) first component(s) 422 are produced. By conducting one or more optimizing process(es), as described hereinbefore, the rejection rate can be significantly reduced. Preferably, the optimizing result(s) (e.g. the finally adapted control data set) can be stored by the peer-to-peer application 410. The stored optimizing result(s) may be used by the same additive manufacturing apparatus 402.1 or a further additive manufacturing apparatus 402.2 if the first component 422 (or a similar component) should be produced again.

As described hereinbefore, preferably, all produced components 422 can be provided with a machine-readable identifier code 450 added at an individual location of the one or more component(s) 422. The respective location coordinates and e.g. the identifier corresponding to said machine-readable identifier code 450 can be stored by the peer-to-peer application 410, in particular, in a component storage formed by at least a part of the depicted storage arrangement 440. Preferably, the data is stored in an encrypted manner.

Furthermore, further data related to a produced first component 422 can be stored together with the identifier and the location in the component storage. For instance, all detected/measured component parameter data sets, the identifiers of all units and entities involved in the production process, identifier of the provider of the starting material, involved transport units, results of previous optimization and validation steps, identifier of the all owner of the component during its lifecycle, etc. can be stored together in the component storage.

In particular, the customer entity 460 may have access at least to the identifier and the location coordinates (and e.g. the used coordinate system) or a cryptographic key and a mapping algorithm to generate the ID. For instance, the peer-to-peer application 410 (e.g. access controlling means) can provide this information to the peer-to-peer module 462 e.g. upon receipt of a request message. Thereby, the signature of the request message can be checked. Only if the check result is positive (e.g. due to a match with an identifier stored in a production transaction agreement and/or access transaction agreement, the respective information can be provided.

The customer entity 460 may comprise a reading entity 464, e.g. an optical reading entity 464 or an X-ray reading entity 464. Based on the information obtained from the peer-to-peer application 410 (e.g. location coordinates and used coordination system), the reading entity 464 may be configured to read out the identifier from the machine-readable identifier code 450. Then, it can be checked by the customer entity 460 whether the read identifier corresponds to the identifier provided by the peer-to-peer application 410.

The peer-to-peer application 410 might comprise access controlling means configured to control the access to data stored in the component storage. For instance, access transaction agreements can be generated, as described hereinafter. Based on the access transaction agreements, in particular, based on the identifiers of authorized entities, the access controlling means may manage and control the access to the data stored in the component storage.

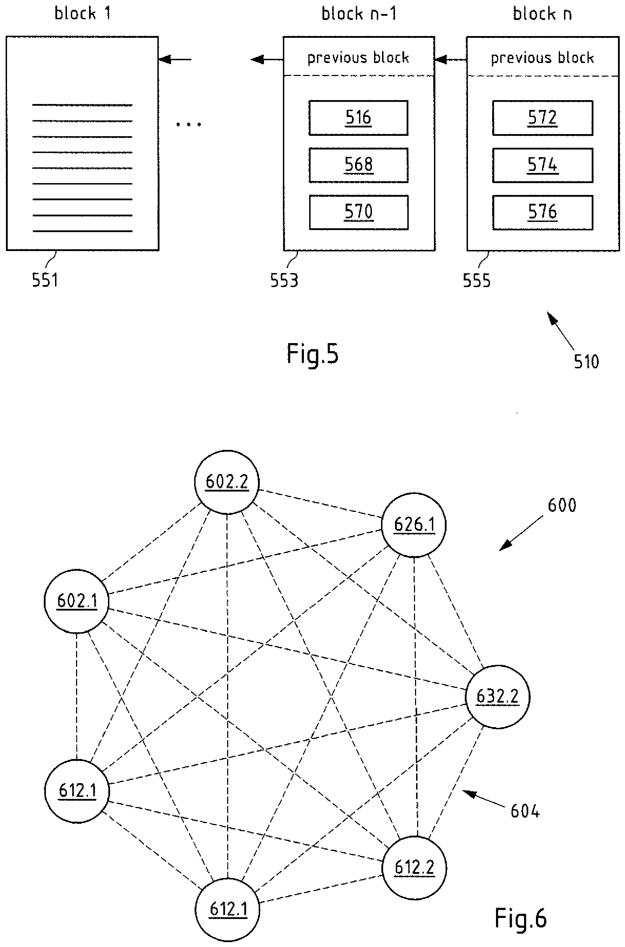

Figure 5 shows a schematic view of an embodiment of a peer-to-peer application 510 according to the present invention.

The depicted peer-to-peer application 510 is a register or distributed ledger readable, in particular, by the participants of the peer-to-peer network. Thereby, data set(s) e.g. in form of messages can be written and/or read into/from the register 510 by a peer-to-peer module assigned to an entity of the production system and/or any other participants in the peer-to-peer network. In a preferred embodiment, the peer-to-peer application 510 may be a block chain 510.

Hereinafter, it is assumed in the following description of the present embodiment that the at least one peer-to-peer application 510 is a block chain 510. However, the following remarks can be easily transferred to other peer-to-peer applications, such as a Directed Acyclic Graph (DAG). A directed acyclic graph, such as IOTA or Tangle, means that blocks (or nodes of the graph) are coupled to each other via directed edges. Thereby, direct means that the (all) edges have (always) a same direction similar to time. In other words, it is not possible to step back. Eventually, acyclic means that loops do not exist.

In further embodiments of the peer-to-peer application, the block chain can be a permissionless or permissioned block chain. In a specific case the block chain can be public, consortium or private block chain.

In a further embodiment, the peer-to-peer application can be formed with multiple block chains which are connected via mechanisms, such as side chains or smart contracts. Interoperability among block chains can be established.

The block chain 510 is formed by at least one block 551, 553, 555, preferably by a plurality of interconnected blocks 551, 553, 555. The first block 551 may also be called genesis block 551. As can be seen, a block 553, 555 (except for the first block 551) refers to each previous block 551, 553. A new block can be created by a computationally intensive process (for example, so called "mining" or through another appropriate process, such as voting) and will be particularly provided to all participants of the peer-to-peer network. In a further embodiment a (centrally controlled) master node or a set of master nodes may be configured to create new blocks and/or validating transactions. All other nodes can be validation nodes only.

The present block chain 510 is particularly adapted to receive messages, such as messages comprising component parameter data set(s) and/or control data set(s), registering data, authentication result(s), etc., from a peer-to-peer module of a previously described additive manufacturing apparatus, (off-chain) computing entity or from another peer-to-peer device/unit of another participant of the peer-to-peer network. Further, the block chain 510 is particularly adapted to save these messages in the block chain 510. Furthermore, the block chain 510 is configured to generate messages e.g. based on an optimizing process/result, an authentication or authorization process and/or caused by a peer-to-peer module and/or the execution of code of e.g. a controlling means 516. In particular, the block chain 510 is at least configured to control and manage a production system, such as shown in figure 1, 2 or 4.

In particular, a (newly) received message can be saved and published in the current block 555 of the block chain 510. Due to the configuration of a block chain 510 as a public register 532, said data message of e.g. a peer-to-peer module can be read by preferably all participants of the peer-to-peer network. Alternatively or additionally, data of a message may be stored on a central file service, a decentral file service or distributed block chain database (e.g. storage arrangement 440) controlled by the block chain 510.

As already described, in the present block chain 510 different types of messages and data sets, respectively, for example, within a smart contract (algorithm and/or storage at the block chain 510) can be processed and/or stored. In the present example, the block chain 510 comprises a controlling means 516 in form of a smart contract 516. As previously described, the controlling means 516 may be configured to at least control at least one optimizing process.

Furthermore, in the block chain 510 one or more access transaction agreement(s) 574 (and/or previously described production transaction agreement(s)) may be stored. An access transaction agreement 574 may be generated between two (or more) entities in order to define the details of an access to a data portion stored e.g. in a component storage. An example of a generation of such an access transaction agreement 574 will be described in the following:

An access transaction agreement 574 may comprise at least one of the following data:
- Identifiers):: One or more identifier(s) of the involved entities, such as an identifier(s) of the provider(s) of the data portion, identifier(s) of authorized entity(ies), etc.
- Access transaction criterion:: Criterion that must be fulfilled for accessing a data portion
- Data portion:: Identification of the data portion to be accessed
- Key(s): Information about the key(s) used to encrypt the data portion
- Access detail(s):: Detail(s) about access to a data portion (e.g. allowed time duration, number of allowed access actions, registering rule(s)

The access transaction criterion may be e.g. an amount of cryptocurrency e.g. per access action or a flat amount which has to be transferred prior to, during and/or after one or more access action(s). Preferably, at least a part of the agreed amount of cryptocurrency can be locked by the peer-to-peer application 510 prior to an access action. In an embodiment, the access transaction criterion may be a payment channel for streaming small amounts of crypto tokens per each time and/or data unit. It shall be understood that other transaction criteria and further information can be included in an access transaction agreement 574. More information/criteria can be, for example, a time stamp, an ID of the transaction and the like.

In order to generate an access transaction agreement 574, for example a peer-to-peer module of a provider entity of a one or more data portion (e.g. data of one or more specific component(s), type(s) of components) and a peer-to-peer module of an access requesting entity can exchange request and response (acceptance) messages via the peer-to-peer application 574. A request message may comprise indications about the above data (identifications, transaction criteria, etc.).

For instance, an access requesting entity can send by a peer-to-peer module a request message 568 to the peer-to-peer application 510 comprising data, such as an identifier assigned to the access requesting entity, desired one or more data portion(s) and/or at least one access transaction criterion.

Another message 570 may be an acceptance message 570 of e.g. one or more provider entities. An acceptance message 570 may comprise identical or at least similar data details as compared with a request message 568. Additionally, the acceptance message 570 can comprise a reference indication to a previous message, such as the ID of the message 568. The acceptance message 570 can be provided by a further peer-to-peer module of a provider entity or by the peer-to-peer application (e.g. according to preset rules).

If, for example, the acceptance message 570 comprises a higher or other transaction criterion and/or other desired access details, the acceptance/request message 570 can be called a counter-offer message. This can be accepted by the peer-to-peer module of the access requesting entity through an acceptance message. Based on this a peer-to-peer module of an entity may cause the generation of an access transaction agreement 574 about one or more access process(es). For instance, the access transaction agreement 574 can be used for every access in which the access requesting entity accesses the data portion defined in the access transaction agreement 574.

In particular, there can be multiple request messages and/or accepting messages. Each entity can give guidelines, according to which at least one access transaction agreement 574 or other agreements can be generated. In a preferably automated, such as iterative, process each request message can be associated to an optimally corresponding acceptance message. The block chain 510 may be configured to generate, based on the messages of a peer-to-peer module, an access transaction agreement 574. In a similar way, a production transaction agreement can be generated.

The access to at least one data portion controlled by the peer-to-peer application 510 can be controlled by an access controlling means 572 e.g. in form of a smart contract, as described hereinbefore.

Further, the controlling means 516 may be configured to control at least one optimizing process e.g. based on the one or more respective agreement(s) comprising controlling rule(s). The controlling means 516 may be executed by at least part of the nodes of the peer-to-peer network for conducting the controlling process. For instance, upon reception of a component parameter data set, said data set can be forwarded to an optimizing means and the optimizing process can be initiated. Further, the result, preferably, an adapted control data set, can be received and provided to the one or more additive manufacturing apparatus(es). Thereby, the at least one controlling apparatus can be monitored by the nodes of the peer-to-peer network.

Moreover, a block chain 510 may comprise a registering means 576 configured to register a (new) entity, e.g. a testing device, stand-alone device with sensor unit, additive manufacturing apparatus, customer entity, off-chain computing device, etc., in the block chain 510 as a smart asset or an individual user.

Figure 6 shows a schematic view of another embodiment of a production system 600 of the application. In the present embodiment, only nodes and participants 602.1, 602.2, 612.1, 612.2, 626.1, 632.2 of the peer-to-peer network 604 are shown. In the present example, it is assumed that all nodes participants 602.1, 602.2, 612.1, 612.2, 626.1, 632.2 comprise the peer-to-peer application (not shown).

The nodes 602.1, 602.2 may correspond to additive manufacturing apparatuses and e.g. be formed by the respective peer-to-peer modules of additive manufacturing apparatuses. The node 626.1 may be a device having a sensor unit. Node 632.2 may correspond to a testing device. Nodes 612.1 and 612.2 may be other nodes. It shall be understood that nodes can be full, remote or light nodes.

As can be seen, two different types of peers or node computers 602.1, 602.2, 612.1, 612.2, 626.1, 632.2 are presently illustrated. All peers 602.1, 602.2, 612.1, 612.2, 626.1, 632.2 are comprised by the peer-to-peer network 604. In the present embodiment, however, only a part of the peers 602.1, 602.2, 612.1, 612.2, 626.1, 632.2 in the present case, the peers (nodes) 602.1, 612.1, 626.1 check the validity of e.g. a controlling process, an access process, an authentication process, a registering process, an optimizing process and/or further data stored in the peer-to-peer application, such as agreements, instructions data set messages, control data sets, component parameter data sets, and the like.

Furthermore, only a part of the entire peers can be configured to store the peer-to-peer application and/or only a part of the peers can be configured to execute the algorithms of a smart/private contract. Since the validation/verification of e.g. identification data requires a considerable computational effort, it may be advantageous for reasons of efficiency, if only a part of the peers 602.1, 612.1, 626.1, especially particularly powerful peers 602.1, 612.1, 626.1, perform the validation and/or controlling algorithms.

Validation, analytics and optimizing can be done on-chain or off-chain, as described hereinbefore. Off-chain validation and/or optimizing can be managed by the peer-to-peer application, like the code on the block chain. Powerful means in particular a high computing power. In other words, in the present case a valid entry in the peer-to-peer application, such as a block chain, is assumed if (only) a part of the peers 602.1, 612.1, 626.1 comes to a positive result. It shall be understood that only a single, especially particularly powerful peer can perform the validation, analytics and/or optimizing process.

Similarly, in an alternative (not shown) embodiment, a particularly large peer-to-peer network may be divided in two or more clusters. In a corresponding peer-to-peer network, for example, a validation will only be carried out by the members of one cluster (e.g. sharding of a block chain to improve the scalability). In a further embodiment, the peer-to-peer application can be formed using multiple block chains. These block chains are connected via frameworks, such as sidechains or smart contracts or interlegder.

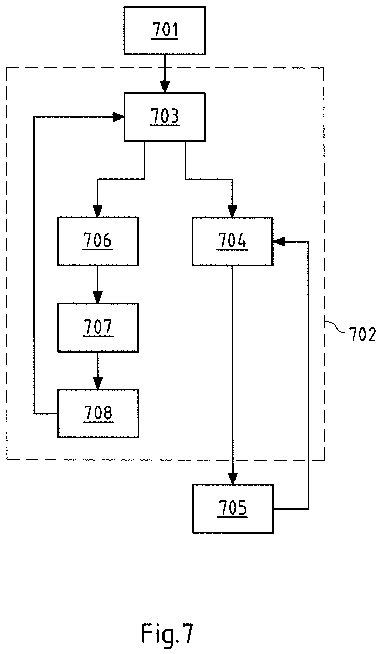

Figure 7 shows an embodiment of an additive manufacturing method according to the present invention. The method can be used for operating a previously described production system.

In a first step 701, an additive manufacturing apparatus may receive an instruction data set comprising e.g. a 3D-design file for producing a specific number of at least one first component. For instance, the instruction data set can be based on a previously generated production transaction agreement, as described above.

Then, the production process can be conducted in step 702. More particularly, according to a first step, based on a provided 3D-design (and e.g. based on historical control data set of similar components), a first control data set can be generated e.g. by the peer-to-peer application (or the additive manufacturing apparatus or a third entity). Based on said first control data set, the production of the first component can be at least started (step 704). In particular, at least one producing tool of the additive manufacturing apparatus can be operated in accordance with the first control data set in step 704, e.g. the first production step 704.

A produced first component can be provided to a delivering entity for delivering the first component to e.g. a customer entity (step 705). If more than one first component should be produced, it can be continued with step 704.

At least partly in parallel to step 704 (it may be also possible that step 706 to 708 may be conducted prior and/or after the production of a first component), one or more component parameter value(s) related to the first component can be detected or monitored in step 706. For instance, one or more starting parameter value(s) related to at least one starting material of the first component, one or more component quality parameter value(s) of the currently produced or already produced first component, one or more environmental parameter value(s) related to the environment of the starting material of the first component or the first component during the first production step and/or one or more status parameter value(s) of the additive manufacturing apparatus used to produce the first component can be detected or monitored in step 706. It shall be understood that in parallel to the processes described above a component or product configuration tree validation process may be needed to be completed.

In step 707, the optimizing process can be initiated. Preferably, based on the detected or monitored one or more parameter value(s) one or more component data parameter set(s) comprising at least a part of said parameter values can be provided by the peer-to-peer application to at least one optimizing means under the control of a controlling means of the peer-to-peer application executable by at least a part of the nodes of the peer-to-peer network. Preferably, the controlling means can forward the at least one component parameter data set to an off-chain computing device comprising one or more optimizing means (preferably neuronal networks) via a peer-to-peer module assigned to the off-chain computing device. Further data can be transmitted to the optimization means. Further data may be the currently used control data set, (historical) optimizing result(s) (e.g. in form of adapted control data set) of previous production step(s) of similar component(s), capabilities of the additive manufacturing process, manufacturing apparatus specification data, in particular, the at least one producing tool, and the like. At least some of said data can be retrieved from a previously described storage arrangement controlled by the peer-to-peer application.

Based on the provided data the at least one optimizing means conducts at least one optimizing process and provides at least one optimizing result (step 708). The optimizing process may include the change of one or more control parameter values in order to optimize the quality of the component to be produced. The optimizing result may be, preferably, an adapted control data set. Thereby, due to the implemented one or more optimizing algorithms it is at least assumed that said adapted control data set yields to a better quality. Further the optimization means may conduct a Proof of Manufacturability. The validated proof may be hashed, signed and stored in the peer-to-peer application.

The adapted control data set can be forwarded, at least controlled by the controlling means, to the at least one additive manufacturing apparatus. Then, the additive manufacturing apparatus, in particular, the at least one producing tool, can be operated in accordance with the adapted control data set. The steps 706 to 708 can be (continuously) repeated at least until the quality of the produced first component meets predefinable quality requirements.

It is noted that during step 704, the previously described machine-readable identifier code can be added to the currently produced component. The corresponding identifier and e.g. the specific location of the machine-readable identifier code, the used coordinate system, and preferably further relevant data related to said first component can be stored e.g. in a component storage in a secure manner. In addition, it is noted that the control data set(s) can be streamed from a source entity to an additive manufacturing apparatus, wherein the streaming process may be controllable by the peer-to-peer application.

Eventually, it is noted that the peer-to-peer application may be configured to evaluate a received 3D design file (e.g. comprising CAD data) based e.g. on stored capabilities of the one or more (registered) additive manufacturing apparatus(es), historical control data set(s) and/or historical component parameter data set(s), whether the provided 3D design is workable at all. Further, the best suited additive manufacturing apparatus of the plurality of additive manufacturing apparatuses and/or an estimated price (e.g. based on estimated amount of starting material, time needed to produce the component, etc.) can be determined by the peer-to-peer application and, in particular, provided to the requesting entity.

## Claims

1. Method for operating at least one additive manufacturing apparatus (102, 202, 402.1, 402.2, 602.1, 602.2), comprising:
- producing at least one first component (222, 322, 422) by the additive manufacturing apparatus (102, 202, 402.1, 402.2, 602.1, 602.2) in accordance with a first control data set during a first production step,
- providing at least one component parameter data set related to the first component (222, 322, 422) to at least one peer-to-peer application (110, 210, 410, 510) of at least one peer-to-peer network (104, 204, 404, 604),
- controlling at least one optimizing process based on the provided component parameter data set and the first control data set by means of at least one controlling means (116, 216, 416, 516) of the peer-to-peer application (110, 210, 410, 510) executed by two or more nodes (112.1, 112.2, 112.3, 212.1, 212.2, 412.1, 412.2, 412.3, 601.1, 612.1, 626.1) of the peer-to-peer network (104, 204, 404, 604) such that the first control data set is adapted, wherein controlling includes monitoring the optimizing process by executing the controlling means (116, 216, 416, 516) by the two or more nodes (112.1, 112.2, 112.3, 212.1, 212.2, 412.1, 412.2, 412.3, 601.1, 612.1, 626.1) of the peer-to-peer network (104, 204, 404, 604), and
- providing the adapted first control data set from the peer-to-peer application (110, 210, 410, 510) to the additive manufacturing apparatus (102, 202, 402.1, 402.2, 602.1, 602.2).

2. Method according to claim 1, wherein
- the first component (222, 322, 422) is produced in accordance with the adapted first control data set during the first production step, and/or
- at least one further first component is produced in accordance with the adapted first control data set during a further first production step.

3. Method according to claim 1 or 2, wherein
- controlling the optimizing process comprises controlling at least one off-chain computing device (244, 444) comprising at least one optimizing means (245.1, 245.2, 245.3) configured to conduct the optimizing process,
- wherein at least the provided component parameter data set is provided by the controlling means (116, 216, 416) to the optimizing means (245.1, 245.2, 245.3) via a peer-to-peer module (246, 446) assigned to the off-chain computing device (244, 444), and/or
- wherein at least the adapted first control data set is provided by the optimizing means (245.1, 245.2, 245.3) to the peer-to-peer application (110, 210, 410, 510) via a peer-to-peer module (246, 446) assigned to the off-chain computing device (244, 444).

4. Method according to any of the preceding claims, wherein
- producing the first component (222, 322, 422) comprises providing the first component (222, 322, 422) with an identifier,
- wherein the identifier is provided to the peer-to-peer application (110, 210, 410, 510), and
- wherein the identifier is stored by the peer-to-peer application (110, 210, 410, 510).

5. Method according to claim 4, wherein
- providing the first component (222, 322, 422) with the identifier comprises adding a machine-readable identifier code (350, 450) at a specific location (352) of the first component (222, 322, 422),
- wherein the specific location (352) of the machine-readable identifier code (350, 450) is provided to the to the peer-to-peer application (110, 210, 410, 510), and
- wherein the specific location (352) of the machine-readable identifier code (350, 450) is stored by the peer-to-peer application (110, 210, 410, 510).

6. Method according to claim 5, wherein adding a machine-readable identifier code (350, 450) at the specific location (352) of the first component (222, 322, 422) comprises adding a noisy area (354) in the vicinity of the specific location (352) of the machine-readable identifier code (350, 450), wherein the noisy area (354) is on the component (222, 322, 422).

7. Method according to any of the preceding claims, wherein the component parameter data set comprises at least one parameter value of the group comprising:
- at least one starting parameter value related to at least one starting material (218) of the first component (222, 322, 422),
- at least one component quality parameter value of the first component (222, 322, 422),
- at least one environmental parameter value related to the environment of the starting material (218) of the first component (222, 322, 422) or the first component (222, 322, 422) during the first production step,
- at least one status parameter value of the additive manufacturing apparatus (102, 202, 402.1, 402.2, 602.1, 602.2) used to produce the first component (222, 322, 422).

8. Method according to any of the preceding claims 4 to 7, wherein the component parameter data set related to the first component (222, 322, 422) is stored by the peer-to-peer application (110, 210, 410, 510) together with the identifier of the first component (222, 322, 422) in a component storage.

9. Method according to claim 8, wherein
- an access at least to the component storage is controlled by at least one access controlling means (572) of the peer-to-peer application (110, 210, 410, 510) based on an access transaction agreement,
- wherein the access transaction agreement comprises at least one identifier of at least one entity (460) authorized to access at least a part of the component storage.

10. Method according to any of the preceding claims, wherein the method comprises:
- receiving a registering message by a registering means (576) of the peer-to-peer application (110, 210, 410, 510) from a peer-to-peer module (106, 206, 230, 236, 246, 406.1, 406.2, 446, 462) assigned to an entity (102, 206, 226, 232, 244, 402.1, 402.2, 444, 460),
- wherein the entity (102, 206, 226, 232, 244, 402.1, 402.2, 444, 460) is registered in the peer-to-peer application (110, 210, 410, 510) by storing a peer-to-peer identifier of the entity (102, 206, 226, 232, 244, 402.1, 402.2, 444, 460).

11. Method according to any of the preceding claims, wherein
- the peer-to-peer application (110, 210, 410, 510) is a decentralized register or a shared database,
- wherein the peer-to-peer application (110, 210, 410, 510) is configured to store data with given certain proofs or signatures.

12. Method according to any of the preceding claims, wherein the peer-to-peer application (110, 210, 410, 510) is a block chain or decentral ledger comprising at least two blocks (551, 553, 555) coupled to each other.

13. Method according to any of the preceding claims, wherein the controlling means (116, 216, 416, 516) is formed as a smart contract executed (112.1, 112.2, 112.3, 212.1, 212.2, 412.1, 412.2, 412.3, 601.1, 612.1, 626.1) by the two or more nodes of the peer-to-peer network (104, 204, 404, 604).

14. Production system (100, 200, 400, 600), comprising:
- at least one additive manufacturing apparatus (102, 202, 402.1, 402.2) configured to produce at least one first component (222, 322, 422) according to at least one first control data set,
- at least one peer-to-peer network (104, 204, 404, 604) with at least one peer-to-peer application (110, 210, 410, 510),
- at least one peer-to-peer module (106, 206, 406.1, 406.2) assigned to the additive manufacturing apparatus (102, 202, 402.1, 402.2) and at least configured to provide at least one component parameter data set related to the first component (222, 322, 422) to the peer-to-peer application (110, 210, 410, 510) of the peer-to-peer network (104, 204, 404, 604),
- wherein the peer-to-peer application (110, 210, 410, 510) comprises at least one controlling means (116, 216, 416) configured to control at least one optimizing process at least based on the provided component parameter data set and the first control data set such that the first control data set is adapted,
- wherein the controlling means (116, 216, 416) is executed by two or more nodes (112.1, 112.2, 112.3, 212.1, 212.2, 412.1, 412.2, 412.3, 601.1, 612.1, 626.1) of the peer-to-peer network (104, 204, 404, 604), wherein controlling includes monitoring the optimizing process by executing the controlling means (116, 216, 416, 516) by the two or more nodes (112.1, 112.2, 112.3, 212.1, 212.2, 412.1, 412.2, 412.3, 601.1, 612.1, 626.1) of the peer-to-peer network (104, 204, 404, 604), and
- wherein the peer-to-peer application (110, 210, 410, 510) is configured to provide the adapted first control data set to the additive manufacturing apparatus (102, 202, 402.1, 402.2).

15. Production system (100, 200, 400, 600) according to claim 14, wherein the additive manufacturing apparatus (102, 202, 402.1, 402.2, 602.1, 602.2) comprises:
- at least one producing tool (108, 208) configured to produce at least one first component (222, 322, 422) based on at least one first control data set,
- at least one peer-to-peer module (106, 206, 406.1, 406.2) configured to provide at least one component parameter data set related to the first component (222, 322, 422) to least one peer-to-peer application (110, 210, 410, 510) of at least one peer-to-peer network (104, 204, 404, 604),
- wherein the peer-to-peer module (106, 206, 406.1, 406.2) is configured to receive an adapted first control data set from the peer-to-peer application (110, 210, 410, 510) such that the first component (222, 322, 422) and/or a further first component is produced by the producing tool (108, 208) in accordance with the adapted first control data set,
- wherein the adapted first control data set is adapted according to an optimizing process based at least on the at least one component parameter data set and the first controlling data set, wherein the optimizing process is controlled by a controlling means (116, 216, 416) of the peer-to-peer application (110, 210, 410, 510).

## Patentansprüche

1. Verfahren zum Betreiben mindestens einer additiven Herstellungsvorrichtung (102, 202, 402.1, 402.2, 602.1, 602.2), umfassend:
- Herstellen mindestens einer ersten Komponente (222, 322, 422) durch die additive Herstellungsvorrichtung (102, 202, 402.1, 402.2, 602.1, 602.2) gemäß einem ersten Steuerdatensatz während eines ersten Herstellungsschrittes,
- Bereitstellen mindestens eines Komponentenparameterdatensatzes, der sich auf die erste Komponente (222, 322, 422) bezieht, mindestens einer Peer-to-Peer Anwendung (110, 210, 410, 510) mindestens eines Peer-to-Peer Netzwerks (104, 204, 404, 604),
- Steuern mindestens eines Optimierungsprozesses auf der Grundlage des bereitgestellten Komponentenparameterdatensatzes und des ersten Steuerdatensatzes mittels mindestens eines Steuermittels (116, 216, 416, 516) der Peer-to-Peer Anwendung (110, 210, 410, 510), das von zwei oder mehr Knoten (112.1, 112.2, 112.3, 212.1, 212.2, 412.1, 412.2, 412.3, 601.1, 612.1, 626.1) des Peer-to-Peer Netzwerks (104, 204, 404, 604) ausgeführt wird, derart, dass der erste Steuerdatensatz angepasst wird, wobei das Steuern das Überwachen des Optimierungsprozesses durch Ausführen der Steuermittel (116, 216, 416, 516) durch die zwei oder mehr Knoten (112. 1, 112.2, 112.3, 212.1, 212.2, 412.1, 412.2, 412.3, 601.1, 612.1, 626.1) des Peer-to-Peer Netzwerks (104, 204, 404, 604) umfasst, und
- Bereitstellen des angepassten ersten Steuerdatensatzes von der Peer-to-Peer Anwendung (110, 210, 410, 510) der additiven Herstellungsvorrichtung (102, 202, 402.1, 402.2, 602.1, 602.2).

2. Verfahren nach Anspruch 1, wobei
- die erste Komponente (222, 322, 422) in Übereinstimmung mit dem angepassten ersten Steuerdatensatz während des ersten Herstellungsschrittes hergestellt wird,
und/oder
- mindestens eine weitere erste Komponente gemäß dem angepassten ersten Steuerdatensatz in einem weiteren ersten Herstellungsschritt hergestellt wird.

3. Verfahren nach Anspruch 1 oder 2, wobei
- das Steuern des Optimierungsprozesses ein Steuern mindestens einer Off-Chain-Rechenvorrichtung (244, 444) umfasst, die mindestens ein Optimierungsmittel (245.1, 245.2, 245.3) umfasst, das eingerichtet ist zum Durchführen des Optimierungsp rozesses,
- wobei zumindest der bereitgestellte Komponentenparameterdatensatz durch das Steuermittel (116, 216, 416) dem Optimierungsmittel (245.1, 245.2, 245.3) über ein Peer-to-Peer Modul (246, 446) bereitgestellt wird, das der Off-Chain-Rechenvorrichtung (244, 444) zugeordnet ist,
und/oder
- wobei zumindest der angepasste erste Steuerdatensatz von dem Optimierungsmittel (245.1, 245.2, 245.3) der Peer-to-Peer Anwendung (110, 210, 410, 510) über ein Peer-to-Peer Modul (246, 446), das der Off-Chain-Rechenvorrichtung (244, 444) zugeordnet ist, zur Verfügung gestellt wird.

4. Verfahren nach einem der vorhergehenden Ansprüche, wobei
- die Herstellen der ersten Komponente (222, 322, 422) das Versehen der ersten Komponente (222, 322, 422) mit einer Kennung umfasst,
- wobei die Kennung der Peer-to-Peer Anwendung (110, 210, 410, 510) zur Verfügung gestellt wird, und
- wobei die Kennung von der Peer-to-Peer Anwendung (110, 210, 410, 510) gespeichert wird.

5. Verfahren nach Anspruch 4, wobei
- das Versehen der ersten Komponente (222, 322, 422) mit der Kennung ein Hinzufügen eines maschinenlesbaren Kennungscodes (350, 450) an einem spezifischen Ort (352) der ersten Komponente (222, 322, 422),
- wobei der spezifische Ort (352) des maschinenlesbaren Kennungscodes (350, 450) der Peer-to-Peer Anwendung (110, 210, 410, 510) zur Verfügung gestellt wird, und
- wobei der spezifische Ort (352) des maschinenlesbaren Kennungscodes (350, 450) von der Peer-to-Peer Anwendung (110, 210, 410, 510) gespeichert wird.

6. Verfahren nach Anspruch 5, wobei das Hinzufügen eines maschinenlesbaren Kennungscodes (350, 450) an dem spezifischen Ort (352) der ersten Komponente (222, 322, 422) ein Hinzufügen eines verrauschten Bereichs (354) in der Nähe des spezifischen Orts (352) des maschinenlesbaren Kennungscodes (350, 450) umfasst, wobei sich der verrauschte Bereich (354) auf der Komponente (222, 322, 422) befindet.

7. Verfahren nach einem der vorhergehenden Ansprüche, wobei der Komponentenparameterdatensatz mindestens einen Parameterwert der Gruppe umfasst, die umfasst:
- mindestens einen Startparameterwert, der sich auf mindestens ein Ausgangsmaterial (218) des ersten Bauteils (222, 322, 422) bezieht,
- mindestens einen Komponentenqualitätsparameterwert der ersten Komponente (222, 322, 422),
- mindestens einen Umweltparameterwert, der sich auf die Umgebung des Ausgangsmaterials (218) der ersten Komponente (222, 322, 422) oder der ersten Komponenten (222, 322, 422) während des ersten Herstellungsschritts bezieht,
- mindestens einen Zustandsparameterwert der additiven Herstellungsvorrichtung (102, 202, 402.1, 402.2, 602.1, 602.2), die zur Herstellung der ersten Komponente (222, 322, 422) verwendet wird.

8. Verfahren nach einem der vorhergehenden Ansprüche 4 bis 7, wobei der auf die erste Komponente (222, 322, 422) bezogene Komponentenparameterdatensatz durch die Peer-to-Peer Anwendung (110, 210, 410, 510) zusammen mit der Kennung der ersten Komponente (222, 322, 422) in einem Komponentenspeicher gespeichert wird.

9. Verfahren nach Anspruch 8, wobei
- ein Zugriff zumindest auf den Komponentenspeicher durch mindestens ein Zugriffssteuermittel (572) der Peer-to-Peer Anwendung (110, 210, 410, 510) auf der Grundlage einer Zugriffstransaktionsvereinbarung gesteuert wird,
- wobei die Zugriffstransaktionsvereinbarung mindestens eine Kennung von mindestens einer Entität (460) umfasst, die zum Zugriff auf mindestens einen Teil des Komponentenspeichers berechtigt ist.

10. Verfahren nach einem der vorhergehenden Ansprüche, wobei das Verfahren umfasst:
- Empfangen einer Registrierungsnachricht durch ein Registrierungsmittel (576) der Peer-to-Peer Anwendung (110, 210, 410, 510) von einem Peer-to-Peer Modul (106, 206, 230, 236, 246, 406.1, 406.2, 446, 462), das einer Entität (102, 206, 226, 232, 244, 402.1, 402.2, 444, 460) zugeordnet ist,
- wobei die Entität (102, 206, 226, 232, 244, 402.1, 402.2, 444, 460) in der Peer-to-Peer Anwendung (110, 210, 410, 510) registriert wird, indem eine Peer-to-Peer Kennung der Entität (102, 206, 226, 232, 244, 402.1, 402.2, 444, 460) gespeichert wird.

11. Verfahren nach einem der vorhergehenden Ansprüche, wobei
- die Peer-to-Peer Anwendung (110, 210, 410, 510) ein dezentrales Register oder eine gemeinsam genutzte Datenbank ist,
- wobei die Peer-to-Peer Anwendung (110, 210, 410, 510) so eingerichtet ist, dass sie Daten mit bestimmten vorgegebenen Beweisen oder Signaturen speichert.

12. Verfahren nach einem der vorhergehenden Ansprüche, wobei die Peer-to-Peer Anwendung (110, 210, 410, 510) eine Blockchain oder ein dezentrales Ledger ist, die/das mindestens zwei miteinander gekoppelte Blöcke (551, 553, 555) umfasst.

13. Verfahren nach einem der vorhergehenden Ansprüche, wobei das Steuermittel (116, 216, 416, 516) als ein Smart Contract (112.1, 112.2, 112.3, 212.1, 212.2, 412.1, 412.2, 412.2, 412.3, 601.1, 612.1, 626.1) gebildet wird, der von den zwei oder mehr Knoten des Peer-to-Peer Netzwerks (104, 204, 404, 604) ausgeführt wird.

14. Herstellungssystem (100, 200, 400, 600), umfassend:
- mindestens eine additive Herstellungsvorrichtung (102, 202, 402.1, 402.2), die eingerichtet ist zum Herstellen mindestens einer ersten Komponente (222, 322, 422) gemäß mindestens einem ersten Steuerdatensatz,
- mindestens ein Peer-to-Peer Netzwerk (104, 204, 404, 604) mit mindestens einer Peer-to-Peer Anwendung (110, 210, 410, 510),
- mindestens ein Peer-to-Peer Modul (106, 206, 406.1, 406.2), das der additiven Herstellungsvorrichtung (102, 202, 402.1, 402.2) zugeordnet ist und zumindest eingerichtet ist zum Bereitstellen mindestens eines auf die erste Komponente (222, 322, 422) bezogenen Komponentenparameterdatensatz der Peer-to-Peer Anwendung (110, 210, 410, 510) des Peer-to-Peer Netzwerks (104, 204, 404, 604),
- wobei die Peer-to-Peer Anwendung (110, 210, 410, 510) mindestens ein Steuermittel (116, 216, 416) umfasst, das eingerichtet ist zum Steuern mindestens eines Optimierungsprozesses zumindest auf der Grundlage des bereitgestellten Komponentenparameterdatensatzes und des ersten Steuerdatensatzes, derart, dass der erste Steuerdatensatz angepasst wird,
- wobei das Steuermittel (116, 216, 416) von zwei oder mehr Knoten (112.1, 112.2, 112.3, 212.1, 212.2, 412.1, 412.2, 412.3, 601.1, 612.1, 626.1) des Peer-to-Peer Netzwerks (104, 204, 404, 604) ausgeführt wird, wobei das Steuern ein Überwachen des Optimierungsprozesses durch Ausführen des Steuermittels (116, 216, 416, 516) durch die zwei oder mehr Knoten (112.1, 112.2, 112.3, 212.1, 212.2, 412.1, 412.2, 412.3, 601.1, 612.1, 626.1) des Peer-to-Peer Netzwerks (104, 204, 404, 604) umfasst, und
- wobei die Peer-to-Peer Anwendung (110, 210, 410, 510) eingerichtet ist zum Bereitstellen des angepassten ersten Steuerdatensatzes der additiven Herstellungsvorrichtung (102, 202, 402.1, 402.2).

15. Herstellungssystem (100, 200, 400, 600) nach Anspruch 14, wobei die additive Herstellungsvorrichtung (102, 202, 402.1, 402.2, 602.1, 602.2) umfasst:
- mindestens ein Herstellungswerkzeug (108, 208), das eingerichtet ist zum Herstellen mindestens einer ersten Komponente (222, 322, 422) auf der Grundlage mindestens eines ersten Steuerdatensatzes,
- mindestens ein Peer-to-Peer Modul (106, 206, 406.1, 406.2), das eingerichtet ist zum Bereitstellen mindestens eines auf die erste Komponente (222, 322, 422) bezogenen Komponentenparameterdatensatzes mindestens einer Peer-to-Peer Anwendung (110, 210, 410, 510) mindestens eines Peer-to-Peer Netzwerks (104, 204, 404, 604),
- wobei das Peer-to-Peer Modul (106, 206, 406.1, 406.2) eingerichtet ist zum Empfangen eines angepassten ersten Steuerdatensatzes von der Peer-to-Peer Anwendung (110, 210, 410, 510), derart, dass die erste Komponente (222, 322, 422) und/oder eine weitere erste Komponente durch das Herstellungswerkzeug (108, 208) in Übereinstimmung mit dem angepassten ersten Steuerdatensatz hergestellt wird,
- wobei der angepasste erste Steuerdatensatz gemäß einem Optimierungsprozess angepasst wird, der zumindest auf dem zumindest einen Komponentenparameterdatensatz und dem ersten Steuerdatensatz basiert, wobei der Optimierungsprozess durch ein Steuermittel (116, 216, 416) der Peer-to-Peer Anwendung (110, 210, 410, 510) gesteuert wird.

## Revendications

1. Procédé permettant de faire fonctionner au moins un appareil de fabrication additive (102, 202, 402.1, 402.2, 602.1, 602.2), ledit procédé consistant :
- à produire au moins un premier composant (222, 322, 422) par l'appareil de fabrication additive (102, 202, 402.1, 402.2, 602.1, 602.2), en conformité avec un premier ensemble de données de contrôle au cours d'une première étape de production,
- à fournir au moins un ensemble de données de paramètres de composant concernant le premier composant (222, 322, 422), ledit ensemble de données étant fourni à au moins une application de poste à poste (110, 210, 410, 510) d'au moins un réseau de poste à poste (104, 204, 404, 604),
- à contrôler au moins un processus d'optimisation basé sur l'ensemble - fourni - de données de paramètres de composant et basé sur le premier ensemble de données de contrôle, ledit contrôle étant effectué par au moins un moyen de contrôle (116, 216, 416, 516) de l'application de poste à poste (110, 210, 410, 510), ledit moyen de contrôle étant mis en œuvre par deux nœuds ou plus (112.1, 112.2, 112.3, 212.1, 212.2, 412.1, 412.2, 412.3, 601.1, 612.1, 626.1) du réseau de poste à poste (104, 204, 404, 604), de manière telle que le premier ensemble de données de contrôle soit adapté, procédé dans lequel le contrôle comprend la surveillance du processus d'optimisation par la mise en œuvre des moyens de contrôle (116, 216, 416, 516) assurée par les deux nœuds ou plus (112.1, 112.2, 112.3, 212.1, 212.2, 412.1, 412.2, 412.3, 601.1, 612.1, 626.1) du réseau de poste à poste (104, 204, 404, 604), et
- à fournir à l'appareil de fabrication additive (102, 202, 402.1, 402.2, 602.1, 602.2), le premier ensemble - adapté - de données de contrôle provenant de l'application de poste à poste (110, 210, 410, 510).

2. Procédé selon la revendication 1, dans lequel
- le premier composant (222, 322, 422) est produit au cours de la première étape de production, en conformité avec le premier ensemble - adapté - de données de contrôle, et/ou
- au moins un autre premier composant est produit au cours d'une autre première étape de production, en conformité avec le premier ensemble - adapté - de données de contrôle.

3. Procédé selon la revendication 1 ou 2, dans lequel
- le fait de contrôler le processus d'optimisation consiste à contrôler au moins un dispositif informatique hors chaîne (244, 444) comprenant au moins un moyen d'optimisation (245.1, 245.2, 245.3) configuré pour effectuer le processus d'optimisation,
- procédé dans lequel au moins l'ensemble - fourni - de données de paramètres de composant est fourni, par les moyens de contrôle (116, 216, 416), aux moyens d'optimisation (245.1, 245.2, 245.3) via un module de poste à poste (246, 446) affecté au dispositif informatique hors chaîne (244, 444), et/ou
- procédé dans lequel au moins le premier ensemble - adapté - de données de contrôle est fourni, par les moyens d'optimisation (245.1, 245.2, 245.3), à l'application de poste à poste (110, 210, 410, 510) via un module de poste à poste (246, 446) affecté au dispositif informatique hors chaîne (244, 444).

4. Procédé selon l'une quelconque des revendications précédentes, dans lequel
- le fait de produire le premier composant (222, 322, 422) consiste à fournir le premier composant (222, 322, 422) avec un identifiant,
- procédé dans lequel l'identifiant est fourni à l'application de poste à poste (110, 210, 410, 510), et
- procédé dans lequel l'identifiant est stocké en mémoire par l'application de poste à poste (110, 210, 410, 510).

5. Procédé selon la revendication 4, dans lequel
- le fait de fournir le premier composant (222, 322, 422) avec l'identifiant consiste à ajouter, au niveau d'un emplacement spécifique (352) du premier composant (222, 322, 422), un code d'identifiant (350, 450) pouvant être lu par la machine,
- procédé dans lequel l'emplacement spécifique (352) du code d'identifiant (350, 450) pouvant être lu par la machine est fourni à l'application de poste à poste (110, 210, 410, 510), et
- procédé dans lequel l'emplacement spécifique (352) du code d'identifiant (350, 450) pouvant être lu par la machine est stocké en mémoire par l'application de poste à poste (110, 210, 410, 510).

6. Procédé selon la revendication 5, dans lequel
- le fait d'ajouter, au niveau de l'emplacement spécifique (352) du premier composant (222, 322, 422), un code d'identifiant (350, 450) pouvant être lu par la machine, consiste à ajouter une zone bruyante (354) située à proximité de l'emplacement spécifique (352) du code d'identifiant (350, 450) pouvant être lu par la machine, où la zone bruyante (354) est sur le composant (222, 322, 422).

7. Procédé selon l'une quelconque des revendications précédentes, dans lequel l'ensemble de données de paramètres de composant comprend au moins une valeur de paramètre du groupe comprenant :
- au moins une valeur de paramètre de départ concernant au moins un matériau de départ (218) du premier composant (222, 322, 422),
- au moins une valeur de paramètre de qualité de composant, ladite valeur de paramètre concernant le premier composant (222, 322, 422),
- au moins une valeur de paramètre environnemental concernant l'environnement du matériau de départ (218) du premier composant (222, 322, 422), ou bien concernant le premier composant (222, 322, 422) au cours de la première étape de production,
- au moins une valeur de paramètre d'état de l'appareil de fabrication additive (102, 202, 402.1, 402.2, 602.1, 602.2) utilisé pour produire le premier composant (222, 322, 422).

8. Procédé selon l'une quelconque des revendications précédentes 4 à 7, dans lequel l'ensemble de données de paramètres de composant concernant le premier composant (222, 322, 422) est stocké en mémoire par l'application de poste à poste (110, 210, 410, 510), ainsi que l'identifiant du premier composant (222, 322, 422), dans une mémoire de stockage des composants.

9. Procédé selon la revendication 8, dans lequel
- un accès au moins à la mémoire de stockage des composants est contrôlé par au moins un moyen de contrôle d'accès (572) de l'application de poste à poste (110, 210, 410, 510), ledit accès étant basé sur un accord de transaction d'accès,
- procédé dans lequel l'accord de transaction d'accès comprend au moins un identifiant d'au moins une entité (460) autorisée à accéder à au moins une partie de la mémoire de stockage des composants.

10. Procédé selon l'une quelconque des revendications précédentes, où ledit procédé consiste :
- à recevoir un message d'enregistrement par un moyen d'enregistrement (576) de l'application de poste à poste (110, 210, 410, 510), ledit message provenant d'un module de poste à poste (106, 206, 230, 236, 246, 406.1, 406.2, 446, 462) affecté à une entité (102, 206, 226, 232, 244, 402.1, 402.2, 444, 460),
- procédé dans lequel l'entité (102, 206, 226, 232, 244, 402.1, 402.2, 444, 460) est enregistrée dans l'application de poste à poste (110, 210, 410, 510), en stockant en mémoire un identifiant de poste à poste de l'entité (102, 206, 226, 232, 244, 402.1, 402.2, 444, 460).

11. Procédé selon l'une quelconque des revendications précédentes, dans lequel
- l'application de poste à poste (110, 210, 410, 510) est un registre décentralisé ou une base de données partagée,
- procédé dans lequel l'application de poste à poste (110, 210, 410, 510) est configurée pour stocker en mémoire des données avec certaines preuves ou signatures fournies.

12. Procédé selon l'une quelconque des revendications précédentes, dans lequel l'application de poste à poste (110, 210, 410, 510) est une chaîne de blocs ou un registre décentralisé comprenant au moins deux blocs (551, 553, 555) couplés l'un à l'autre.

13. Procédé selon l'une quelconque des revendications précédentes, dans lequel les moyens de contrôle (116, 216, 416, 516) sont formés comme un contrat intelligent mis en œuvre par les deux nœuds ou plus (112.1, 112.2, 112.3, 212.1, 212.2, 412.1, 412.2, 412.3, 601.1, 612.1, 626.1) du réseau de poste à poste (104, 204, 404, 604).

14. Système de production (100, 200, 400, 600) comprenant :
- au moins un appareil de fabrication additive (102, 202, 402.1, 402.2) configuré pour produire au moins un premier composant (222, 322, 422) selon au moins un premier ensemble de données de contrôle,
- au moins un réseau de poste à poste (104, 204, 404, 604) avec au moins une application de poste à poste (110, 210, 410, 510),
- au moins un module de poste à poste (106, 206, 406.1, 406.2) affecté à l'appareil de fabrication additive (102, 202, 402.1, 402.2) et au moins configuré pour fournir au moins un ensemble de données de paramètres de composant, ledit ensemble de données concernant le premier composant (222, 322, 422) et étant fourni à l'application de poste à poste (110, 210, 410, 510) du réseau de poste à poste (104, 204, 404, 604),
- système de production dans lequel l'application de poste à poste (110, 210, 410, 510) comprend au moins un moyen de contrôle (116, 216, 416) configuré pour contrôler au moins un processus d'optimisation basé au moins sur l'ensemble - fourni - de données de paramètres de composant et basé sur le premier ensemble de données de contrôle, de manière telle que le premier ensemble de données de contrôle soit adapté,
- système de production dans lequel les moyens de contrôle (116, 216, 416) sont mis en œuvre par deux nœuds ou plus (112.1, 112.2, 112.3, 212.1, 212.2, 412.1, 412.2, 412.3, 601.1, 612.1, 626.1) du réseau de poste à poste (104, 204, 404, 604), système de production dans lequel le contrôle comprend la surveillance du processus d'optimisation par la mise en œuvre des moyens de contrôle (116, 216, 416, 516) assurée par les deux nœuds ou plus (112.1, 112.2, 112.3, 212.1, 212.2, 412.1, 412.2, 412.3, 601.1, 612.1, 626.1) du réseau de poste à poste (104, 204, 404, 604), et
- système de production dans lequel l'application de poste à poste (110, 210, 410, 510) est configurée pour fournir à l'appareil de fabrication additive (102, 202, 402.1, 402.2) le premier ensemble - adapté - de données de contrôle.

15. Système de production (100, 200, 400, 600) selon la revendication 14, dans lequel l'appareil de fabrication additive (102, 202, 402.1, 402.2, 602.1, 602.2) comprend :
- au moins un outil de production (108, 208) configuré pour produire au moins un premier composant (222, 322, 422) basé sur au moins un premier ensemble de données de contrôle,
- au moins un module de poste à poste (106, 206, 406.1, 406.2) configuré pour fournir au moins un ensemble de données de paramètres de composant, ledit ensemble de données concernant le premier composant (222, 322, 422) et étant fourni à au moins une application de poste à poste (110, 210, 410, 510) d'au moins un réseau de poste à poste (104, 204, 404, 604),
- système de production dans lequel le module de poste à poste (106, 206, 406.1, 406.2) est configuré pour recevoir de l'application de poste à poste (110, 210, 410, 510), un premier ensemble - adapté - de données de contrôle, de manière telle que le premier composant (222, 322, 422) et/ou un autre premier composant soit produit par l'outil de production (108, 208), en conformité avec le premier ensemble - adapté - de données de contrôle,
- système de production dans lequel le premier ensemble - adapté - de données de contrôle est adapté selon un processus d'optimisation basé au moins sur l'ensemble de données de paramètres de composant - ledit ensemble étant au moins au nombre de un - et basé sur le premier ensemble de données de contrôle, système de production dans lequel le processus d'optimisation est contrôlé par un moyen de contrôle (116, 216, 416) de l'application de poste à poste (110, 210, 410, 510).
